# FASCICULE DE BREVET EUROPEEN

(11) **EP 2 986 124 B1**
(45) Date de publication et mention de la délivrance du brevet: **06.03.2019**
(21) Numéro de dépôt: 14710260.2
(22) Date de dépôt: 14.03.2014
(51) Int. Cl.: A21D 2/16, A21D 13/06, A21D 13/068, A23L 3/3463, A21D 2/18, A21D 13/066, A23P 10/20, A23P 10/22, A23P 10/40, A23L 29/212, A23L 33/20, A23L 17/10, A23L 35/00, A21D 13/40, A21D 2/36, A23D 7/005, A23L 3/46, A23L 17/60

(54) **MATIÈRE GRASSE ALLÉGÉE ET SON UTILISATION EN BOULANGERIE ET PÂTISSERIE**
LEICHTES FETTPRODUKT UND DESSEN VERWENDUNG FÜR DIE HERSTELLUNG VON BACKWAREN
LIGHT FAT PRODUCT AND ITS USE IN BAKERY

(30) Priorité: 15.03.2013 EP 13159385; 01.07.2013 FR 1356392
(43) Date de publication de la demande: 24.02.2016
(73) Titulaire: Corbion Biotech, Inc., South San Francisco, CA 94080 (US)
(72) Inventeur: DELEBARRE, Marie, F-62136 La Couture (FR); BOURSIER, Thomas, F-59370 Mons en Baroeul (FR); VARLAMOFF, Caroline, F-59112 Annoeullin (FR)
(74) Mandataire: Lebrette, Camille
(86) Numéro de dépôt international: PCT/EP2014/055061
(87) Numéro de publication internationale: WO 2014/140245

(56) Documents cités:
- EP-A2- 0 622 027
- WO-A1-2010/100368
- WO-A1-2010/100369
- WO-A1-2010/120923
- WO-A1-2011/150411
- WO-A1-2014/117163
- US-A1- 2011 256 282
- "Algal flour (Chlorella) GRAS notice", Solazyme , 16 mars 2010 (2010-03-16), pages 3-75, XP002724923, Extrait de l'Internet: URL:http://www.fda.gov/ucm/groups/fdagov-p ublic/@fdagov-foods-gen/documents/document /ucm269513.pdf [extrait le 2014-05-23]

## Description

### DOMAINE DE L'INVENTION

La présente invention concerne une matière grasse allégée obtenue en substituant une partie de la matière grasse d'origine végétale et/ou animale de départ par une farine de microalgues, ainsi que ses utilisations dans les domaines de la boulangerie et/ou de la pâtisserie et/ou de la viennoiserie.

### ARRIERE-PLAN TECHNOLOGIQUE

Les produits de biscuiterie-pâtisserie sont extrêmement nombreux (plus de 800 références). Les formulations bien que très nombreuses renferment souvent les mêmes ingrédients de base : de la farine, du sucre, des oeufs et des matières grasses d'origine animale et/ou végétale. Généralement, les pâtisseries se définissent comme des préparations sucrées de pâte travaillée et cuite au four et/ou dans un moule, de formes et de garnitures variées (crème, fruits) et englobent entre autre les gâteaux et les tartes. De plus, les pâtisseries sont consommées soit sous forme de dessert en fin de repas, soit à l'occasion de collation en cours de journée (notamment à l'occasion d'un goûter ou d'un thé).

En parallèle de la pâtisserie, on appelle viennoiseries les produits de boulangerie dont la technique de fabrication se rapproche de celle du pain ou de la pâte feuilletée, mais auxquels leurs ingrédients donnent un caractère plus gras et plus sucré qui les rapproche de la pâtisserie (oeufs, beurre et/ou matières grasses végétales, lait, crème, sucre, etc.). De plus, très souvent, les pâtes sont levées ou feuilletées.

Par essence, les pâtisseries et viennoiseries sont souvent riches en glucides simples et en matières grasses, notamment saturées (résultant principalement des graisses laitières). Or, les recommandations de santé publiques encouragent fortement à limiter la consommation de sucre, d'aliments riches en sucre et/ou en matières grasses.

Pourtant, les matières grasses d'origine animale et/ou végétale jouent un rôle important dans les produits destinés à la boulangerie, pâtisserie et viennoiserie. Non seulement elles révèlent et véhiculent l'arôme des produits finis, mais elles déterminent le résultat d'une série de caractéristiques techniques telles que par exemple, la friabilité d'un croissant ou le bon goût riche d'un gâteau au beurre. On les sait caloriques et selon leur origine pas forcément très bonnes pour la santé, et pourtant, impossible de s'en passer tant leur double rôle technique et gustatif est important, voire primordial sur le résultat final du produit.

De plus, il est tout de même nécessaire de consommer une certaine quantité de matières grasses quotidiennement pour assurer le bon fonctionnement de notre organisme. Par exemple, les huiles et les lipides apportent des calories et des acides gras essentiels qui aident l'organisme à absorber les vitamines liposolubles comme les vitamines A, D, E et K. Le type de lipide consommé est aussi important pour la santé que la quantité consommée.

C'est pourquoi il est fortement recommandé de choisir des lipides insaturés connus pour être de bons lipides. Consommer trop de lipides du mauvais type, comme les lipides saturés et les lipides trans, peut faire élever les taux de cholestérol LDL (Low Density Lipoprotein ou « mauvais » cholestérol) et réduire ceux du cholestérol HDL (High Density Lipoprotein ou « bon » cholestérol). Ce déséquilibre peut faire augmenter les risques d'hypertension artérielle, de rétrécissement des artères (athérosclérose), de crise cardiaque et d'AVC (Accident Vasculaire Cérébral).

Parmi les lipides insaturés, on distingue les lipides monoinsaturés et les polyinsaturés. Il a été démontré que les matières grasses monoinsaturées améliorent les taux de cholestérol sanguins. On les retrouve dans l'huile d'olive, de canola et d'arachide, dans la margarine non hydrogénée, dans les avocats et dans certaines noix comme les amandes, les pistaches, les noix de cajou, les pacanes et les noisettes. Les matières grasses polyinsaturées aident l'organisme à se débarrasser du cholestérol récemment produit. Parmi celles-ci, on retrouve les oméga-3, qui peuvent prévenir les caillots sanguins, réduire le risque de subir un AVC et aussi réduire les triglycérides, un type de matières grasses dans le sang lié aux maladies du coeur. Les meilleures sources d'oméga-3 sont les poissons d'eau froide, de même que les huiles de canola et de soja, les oeufs riches en oméga-3, les graines de lin, les noix de Grenoble, les pacanes et les pignons. On retrouve aussi dans cette catégorie de matières grasses, les oméga-6 qui aident à réduire le cholestérol LDL, mais dont une trop grande consommation peut également réduire le cholestérol HDL. Il faut donc les consommer avec modération. On les retrouve dans les huiles de carthame, de tournesol et de maïs, les margarines non hydrogénées, les noix tels que les amandes, les pacanes, les noix du Brésil et les graines de tournesol. De nombreux plats préparés en contiennent également.

En parallèle, on trouve les lipides saturés que l'on retrouve le plus fréquemment dans les viandes grasses, les produits laitiers entiers, le beurre, le saindoux, l'huile de noix de coco et l'huile de palme. Ces matières grasses peuvent augmenter le « mauvais » cholestérol LDL. Tout comme les matières grasses saturées, les lipides trans font augmenter le cholestérol LDL. Les lipides trans se retrouvent dans les margarines partiellement hydrogénées, les aliments frits des comptoirs de restauration rapide (frites, beignes) et dans de nombreux craquelins, biscuits et produits de pâtisserie commerciale.

De ce qui précède, nous pouvons retenir que les matières grasses rendent les aliments plus savoureux et sont indispensables à notre santé. Mais, que consommées en excès, elles peuvent avoir des effets négatifs, notamment sur le système cardiaque et vasculaire. Le beurre, les nombreuses huiles végétales et les lipides contenus dans les aliments sont des matières grasses différentes. Le beurre et les produits qui le contiennent, comme par exemple les pâtisseries et les viennoiseries, apportent surtout des matières grasses dites saturées. Lorsqu'elles sont trop abondantes dans nos assiettes, elles peuvent conduire à une augmentation du mauvais cholestérol. Les huiles végétales apportent des acides gras essentiels. Il est intéressant d'utiliser des huiles différentes pour bénéficier de leurs avantages complémentaires. US 2011/256282 A1, EP 0 622 027 et WO 2011/150411 A1 A2 divulguent l'utilisation de farine de microalgues comme agent de remplacement de la matière grasse dans des produits alimentaires.

Et pourtant, il n'est pas aussi simple de substituer le beurre dans les pâtisseries et les viennoiseries. Le beurre permet d'assouplir la pâte mais aussi de l'alourdir. Il rend la mie plus moelleuse et la croûte plus fine et fondante, apporte un goût bien particulier et un côté savoureux très appréciés des consommateurs en quête de produits de qualité et d'authenticité. Il isole les particules des autres ingrédients qui ne peuvent se lier entre elles. Sans lui, le produit devient friable.

Ainsi, dans l'art antérieur, des solutions ont été décrites pour substituer le beurre par des matières grasses ayant une image plus positive en termes de santé, comme par exemple des matières grasses d'origine végétale. Par contre, les produits obtenus sont souvent décrits comme étant fades et comme ayant une texture peu, voire pas, feuilletée pour les croissants par exemple.

Ainsi, les solutions connues de l'art antérieur conduisent très souvent à des produits présentant une qualité finale moindre, en termes de texture et de goût notamment.

Il existe donc un réel besoin pour remplacer partiellement ou totalement les matières grasses d'origine animale et/ou végétale dans des recettes de produits de boulangerie, pâtisserie et viennoiserie, de façon à diminuer la charge calorique et l'apport de mauvaises graisses. Les solutions proposées doivent résulter dans des produits présentant les mêmes qualités organoleptiques que les produits dits traditionnels. Par ailleurs, les solutions proposées doivent pouvoir être mise en oeuvre par les hommes du métier sans changement drastique des recettes et de préférence à grande échelle, sur des productions en ligne.

### RESUME DE L'INVENTION

Forte de ce constat et après de nombreux travaux de recherche, la société Demanderesse a eu le mérite de répondre à toutes les exigences requises et a trouvé qu'un tel but pouvait être atteint dès lors que l'on utilise une farine de microalgues en tant qu'ingrédient dans la formulation d'une matière grasse allégée, apte à se substituer partiellement aux matières grasses d'origine végétale et/ou animale, et plus particulièrement aux matières grasses d'origine animale comme le beurre, tout en maintenant les qualités finales du produit obtenu.

La présente invention concerne une matière grasse allégée selon la revendication 1.

Dans un mode de réalisation préféré de l'invention, ladite matière grasse allégée est caractérisé en ce qu'au moins 10% ou au moins 20% de sa charge lipidique initiale sont remplacés par une farine de microalgues.

Dans un second mode de réalisation, ladite matière grasse allégée est caractérisé en ce qu'au moins 40% ou au moins 50% de sa charge lipidique initiale sont remplacés une farine de microalgues.

Dans un mode encore plus préféré, ladite matière grasse allégée est caractérisé en ce qu'au moins 60% ou au moins 70% de sa charge lipidique initiale sont remplacés par une farine de microalgues.

De préférence, la matière grasse allégée est caractérisée en ce qu'elle comprend au minimum 40% de matière grasse, de préférence 60% ou 70%, exprimés en poids sec.

De préférence, la matière grasse allégée est caractérisée en ce qu'elle comprend au plus 95% en poids de matière grasse, exprimé en poids sec.

Selon un mode préférentiel, la matière grasse allégée comprend de 50 à 95% de matière grasse, exprimés en poids sec.

Selon l'invention, la matière grasse allégée contient également un liquide potable. Le liquide potable peut être choisi parmi l'eau, les jus de fruits, les nectars de fruits, les jus de légumes, les nectars de légumes, les sodas, et de préférence est de l'eau.

Selon l'invention, la matière grasse allégée est également caractérisée en ce qu'elle contient de 30% à 90% de matière grasse d'origine animale et/ou végétale et de 0,5% à 50% de farine de microalgues, les pourcentages étant indiqués en poids de matière grasse allégé.

Selon un mode préféré, la matière grasse allégée est caractérisée en ce qu'elle contient de 30% à 90% de de matière grasse d'origine animale et/ou végétale et de 0,5% à 50% de farine de microalgues et de 1 à 40% de liquide potable, les pourcentages étant indiqués en poids de matière grasse allégé.

La matière grasse allégée est caractérisée en ce que la farine de microalgues est sous forme de granules possédant les trois caractéristiques suivantes :
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm,
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

De préférence, la farine de microalgues est une farine de microalgues du genre *Chlorella,* et plus particulièrement de l'espèce *Chlorella protothecoides.*

De préférence, la farine de microalgues contient au moins 12%, au moins 25%, au moins 50%, ou au moins 75% en poids sec de lipides.

Un autre aspect de l'invention concerne également un procédé de préparation d'une matière grasse allégée selon la revendication 13.

Ledit procédé peut lui-même en outre être caractérisé en ce qu'il comprend:
- un mélange de la farine de microalgues et d'eau à une matière grasse d'origine animale et/ou végétale, et de préférence du beurre,
- un stockage à une température inférieure à 10°C, et de préférence inférieure à 5°C, pendant une durée supérieure à 5 heures, et de préférence supérieure à 10 heures.

Plus particulièrement, ledit procédé de préparation d'une matière grasse allégée peut être caractérisé en ce que le mélange de farine de microalgues et d'eau à la matière grasse d'origine animale et/ou végétale comprend
- un mélange de la farine de microalgues et d'eau, à un ratio pouvant aller de 1 :9 à 9 :1, préférentiellement 1 :3 à 1 :2 , et
- une incorporation de la farine de microalgues préalablement réhydratée à une matière grasse d'origine animale et/ou végétale en substitution d'une partie de celle-ci.

Un autre aspect de la présente invention concerne un procédé de préparation d'un produit de boulangerie, pâtisserie et/ou viennoiserie caractérisé en ce qu'il contient une matière grasse allégée selon l'invention en substitution partielle des matières grasses d'origine animale et/ou végétale.

Ledit procédé de préparation d'un produit de boulangerie est également caractérisé en ce qu'il comprend:
- un mélange des différents ingrédients jusqu'à l'obtention d'une pâte, et
- une cuisson de ladite pâte.

Un autre aspect de l'invention concerne une utilisation de la matière grasse allégée selon l'invention en substitution partielle des matières grasses d'origine animale et/ou végétale dans la préparation de crèmes de fourrage et/ou de ganache. Les crèmes de fourrage et/ou de ganache sont de préférence destinées également au secteur de la pâtisserie.

Enfin, un dernier aspect de l'invention concerne une utilisation d'une matière grasse allégée selon l'invention en substitution partielle des matières grasses d'origine animale et/ou végétale dans un procédé de préparation d'un produit de boulangerie, pâtisserie et/ou viennoiserie, selon l'invention.

### DESCRIPTION DETAILLEE DES MODES DE REALISATION

Ainsi, la présente invention a pour objet une matière grasse allégée caractérisée en ce qu'au moins 5% de sa charge lipidique initiale sont remplacés par une farine de sous forme de granules possédant les trois caractéristiques suivantes:
- une distribution granulométrique monomodale, mesurée sur un granulomètre laser LS de marque COULTER®, comprise entre 2 et 400 µm, centrée sur un diamètre de particules (D mode) entre 5 et 15 µm,
- des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm, et
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

Dans un mode de réalisation préféré de l'invention, ladite matière grasse allégée est caractérisé en ce qu'au moins 10% ou au moins 20% de sa charge lipidique initiale sont remplacés par une farine de microalgues.

Dans un second mode de réalisation, ladite matière grasse allégée est caractérisé en ce qu'au moins 40% ou au moins 50% de sa charge lipidique initiale sont remplacés une farine de microalgues.

Dans un mode encore plus préféré, ladite matière grasse allégée est caractérisé en ce qu'au moins 60% ou au moins 70% de sa charge lipidique initiale sont remplacés par une farine de microalgues.

Dans la présente demande, la dénomination « matière grasse allégée » utilisée doit être comprise dans son interprétation la plus large et comme désignant une matière grasse dont une partie de sa charge lipidique a été remplacée par de la farine de microalgues, pouvant se substituer aux matières grasses d'origine animale et/ou végétale traditionnellement employées dans les domaines de la boulangerie, pâtisserie et viennoiserie.

La matière grasse allégée est généralement sous forme de solide mou à température ambiante. De préférence, dans le contexte du présent document, la matière grasse allégée comprend au minimum 40% de matière grasse, par exemple au minimum 40, 45, 50, 55, 60, 65 ou 70% de matière grasse, de préférence au moins 60% ou 70%, exprimés en poids sec. Selon l'invention, la matière grasse allégée comprend de 50 à 95% de matière grasse, exprimés en poids sec.

Dans un second mode de réalisation préféré de l'invention, la matière grasse allégée est caractérisée en ce qu'elle contient également un liquide potable. En particulier, ladite matière grasse allégée peut être caractérisée en ce qu'il contient de 0,5 à 50% de farine de microalgues et de 1 à 40% de liquide potable, les pourcentages étant indiqués en poids de matière grasse allégé.

Au sens de l'invention, le terme « liquide potable » doit être compris dans son interprétation la plus large et comme désignant par exemple, et de manière non limitative, l'eau, les jus de fruits, les nectars de fruits, les jus de légumes, les nectars de légumes, les sodas. Selon un mode préféré de l'invention, le liquide potable est de l'eau, ladite eau pouvant être de l'eau de source, de l'eau minérale, gazéifiée naturellement ou par adjonction de gaz carbonique ou non gazéifiée.

La présente invention concerne donc de préférence une matière grasse allégée contenant la farine de microalgues telle que définie ci-dessus et un liquide potable se substituant partiellement aux matières grasses d'origine végétale et/ou animale, et plus particulièrement aux matières grasses d'origine animale comme le beurre, et pouvant être utilisée dans des produits alimentaires, et plus particulièrement dans des produits de boulangerie, pâtisserie ou viennoiserie.

Par « partiellement » est entendu que, en comparaison de la recette utilisée, la teneur en l'ingrédient remplacé est diminuée d'au moins 10, 20, 30, 40, 50, 60, 70, 80 ou 90 % en poids, par exemple d'environ 10, 20, 30, 40, 50, 60, 70, 80 ou 90 % en poids. Par « partiellement » est exclu le remplacement total de l'ingrédient. Notamment, les taux de substitution peuvent être compris entre 5 et 95 %, entre 10 ou 20 et 80 ou 95%, entre 40 ou 50 % et 80 ou 95%.

La matière grasse allégée de la présente invention est caractérisé en ce qu'elle contient de 30% à 90% de matière grasse d'origine animale et/ou végétale et de 0,5% à 50% de farine de microalgues.

Dans un mode préféré de réalisation de l'invention, la matière grasse allégée contient de 30% à 90% de de matière grasse d'origine animale et/ou végétale et de 0,5% à 50% de farine de microalgues et de 1 à 40% de liquide potable.

Les pourcentages indiqués sont des pourcentages en poids par rapport au poids total de la matière grasse allégée.

La matière grasse allégée selon l'invention contient de la farine de microalgues, notamment au minimum 0,5, 1, 5, 10, 20, 30, 40 ou 50% en poids de la matière grasse allégée. Ainsi, la matière grasse allégée selon l'invention contient de la farine de microalgues en une quantité comprise entre 0,5 et 50% ou entre 1 ou 5 et 40 ou 50 % ou entre 5 ou 10 et 40 ou 50% ou entre 10 ou 20 et 30 ou 40% en poids de la matière grasse allégée.

Il est à noter, dans la présente invention, que la farine de microalgues vient en substitution d'une partie des matières grasses d'origine présentes dans la matière grasse traditionnellement employée. Ceci permet d'alléger la charge calorique de la matière grasse employée dans les recettes, mais également d'en modifier le profil lipidique en réduisant notamment l'apport de mauvaises graisses.

Dans un mode de réalisation préféré, la somme des composants consistant en la farine de microalgues et le liquide potable représente au minimum 1,5, 5, 10, 15, 20, 30, 40, 60, 80, 90% en poids de la matière grasse allégée. Notamment, la somme des composants peut représenter entre 1,5 ou 5 et 80 ou 90%, ou entre 10 ou 15 et 60 ou 80 %, ou entre 20 ou 30 et 60 ou 80 % en poids de la matière grasse allégée.

Les algues font partie des premiers organismes apparus sur Terre, et sont définies comme des organismes eucaryotes dépourvus de racines, de tige et de feuille, mais possédant de la chlorophylle ainsi que d'autres pigments accessoires à la photosynthèse productrice d'oxygène. Elles sont bleues, rouges, jaunes, doré et brun ou encore vertes. Elles représentent plus de 90% des végétaux marins et 18% du règne végétal, avec leurs 40 000 à 45 000 espèces. Les algues sont des organismes extrêmement variés tant par leur taille et leur forme que par leur structure cellulaire. Elles vivent en milieu aquatique ou très humide. Elles contiennent de nombreuses vitamines et oligo-éléments, et sont de véritables concentrés d'actifs stimulants et bienfaisants pour la santé et la beauté. Elles ont des vertus anti-inflammatoires, hydratantes, adoucissantes, régénérantes, raffermissantes, anti-âge. Elles possèdent également des caractéristiques "technologiques" qui permettent d'apporter de la texture à un produit alimentaire. En effet, les fameux additifs E400 à E407 ne sont en fait que des composés extraits d'algues, dont on utilise les propriétés épaississantes, gélifiantes, émulsifiantes et stabilisantes.

Parmi les algues, on peut distinguer les macroalgues et les microalgues, notamment algues microscopiques unicellulaires, photosynthétiques ou non, d'origine marine ou non, cultivées notamment pour leurs applications en Bio-carburant ou dans le domaine alimentaire. Par exemple, la spiruline (Arthrospira platensis) est cultivée dans des lagunes ouvertes (en phototrophie) pour une utilisation comme complément alimentaire ou incorporée en petites quantités dans des confiseries ou des boissons (généralement moins de 0,5 % p/p). D'autres microalgues riches en lipides, y compris certaines espèces de Chlorella, sont également très populaires dans les pays asiatiques comme compléments alimentaires (citons les microalgues du genre Crypthecodinium ou Schizochytrium). La production et l'utilisation de farines de microalgues est décrite dans les demandes WO 2010/120923 et WO 2010/045368.

Au sens de la présente invention, le terme « farine de microalgues » doit être compris dans son interprétation la plus large et comme désignant par exemple, une composition comprenant une pluralité de particules de biomasse de microalgues. La biomasse de microalgues est dérivée de cellules de microalgues, qui peuvent être entières ou cassées, ou un mélange de cellules entières et cassées. Il est entendu dans le présent document que la farine de microalgues désigne un produit essentiellement composé de biomasse de microalgues, c'est-à-dire à au moins 90, 95, 99%. Dans un mode de réalisation préféré, la farine de microalgues comprend uniquement de la biomasse de microalgues.

La présente invention est ainsi relative à la biomasse de microalgues propre à la consommation humaine qui est riche en nutriments, notamment en lipides et / ou protéines.

La fraction lipidique de la farine de microalgues, qui peut se composer essentiellement d'huiles monoinsaturées, fournit ainsi des avantages nutritionnels et de santé par rapport aux huiles saturées, hydrogénées et polyinsaturées souvent trouvées dans les produits alimentaires conventionnels.

La fraction protéique de la farine de microalgues qui renferme beaucoup d'acides aminés essentiels au bien-être humain et animal fournit donc également des avantages nutritionnels et santé intéressants et non négligeables.

Au sens de l'invention, les microalgues considérées sont les espèces qui produisent des huiles appropriées et / ou des lipides et / ou des protéines.

La biomasse de microalgues comprend au moins 10% en poids sec de lipides, de préférence au moins 12% et encore plus préférentiellement de 25 à 35% ou plus en poids sec de lipides.

Ainsi, l'expression « riche en lipides » doit être interprétée comme se référant à des teneurs d'au moins 10% en poids sec de lipides, de préférence d'au moins 12% en poids sec de lipides et encore plus préférentiellement des teneurs d'au moins 25 à 35% ou plus en poids sec de lipides.

La biomasse de microalgues contient au moins 12%, au moins 25%, au moins 50%, ou au moins 75% en poids sec de lipides.

La biomasse de microalgues contient au moins 30% en poids sec de protéines, au moins 40%, ou au moins 45% en poids sec de protéines.

Selon un autre mode préférentiel de l'invention, les microalgues appartiennent au genre *Chlorella.*

La chlorelle (ou Chlorella) est une algue unicellulaire verte microscopique ou microalgue d'eau douce apparue sur la terre depuis plus de 3 milliards d'années, appartenant à l'embranchement des Chlorophytes. La chlorelle possède la plus grande concentration en chlorophylle de tous les végétaux, et sa capacité à la photosynthèse est considérable. Depuis sa découverte, la chlorelle n'a cessé de générer un intérêt considérable dans le monde, et aujourd'hui elle est produite à grande échelle pour des utilisations dans des compléments alimentaires et nutritionnels. En effet, la chlorelle contient plus de 60% de protéines qui renferment beaucoup d'acides aminés essentiels au bien-être humain et animal. La chlorelle contient également beaucoup de vitamines (A, Bêta carotène, B1 : thiamine, B2 : riboflavine, B3 : niacine, B5 : acide pantothénique, B6 : pyridoxine, B9 : acide folique, B12 : cobalamine, vitamine C : acide ascorbique, vitamine E : tocophérol, vitamine K : phylloquinone), de lutéine (famille des caroténoïdes, puissant antioxydant), et de minéraux dont le calcium, le fer, le phosphore, le manganèse, le potassium, le cuivre et le zinc. En outre, la chlorelle contient certains acides gras polyinsaturés de type oméga indispensables au bon fonctionnement cardiaque et cérébral et à la prévention de nombreuses maladies comme le cancer, le diabète ou l'obésité.

Les bienfaits rapportés à la consommation de chlorelle sont très nombreux. C'est un complément alimentaire utilisé quotidiennement au Japon par 4 millions de personnes. A tel point que le gouvernement japonais l'a classée comme « aliment d'intérêt national ». Facultativement, les microalgues utilisées peuvent être choisies, et de manière non-exhaustive, parmi les *Chlorella protothecoides, Chlorella kessleri, Chlorella minutissima, Chlorella sp., Chlorella sorokiniama, Chlorella luteoviridis, Chlorella vulgaris, Chlorella reisiglii, Chlorella ellipsoidea, Chlorella saccarophila, Parachlorella kessleri, Parachlorella beijerinkii, Prototheca stagnora et Prototheca moriformis.* De manière préférée, les microalgues utilisées selon l'invention appartiennent à l'espèce *Chlorella protothecoides.*

Dans le cadre de l'invention, *Chlorella protothecoides* est choisie en raison de sa composition élevée en lipides.

Dans un mode de réalisation secondaire, *Chlorella protothecoides* est également choisie en raison de sa composition élevée en protéines.

Dans la farine de microalgues, les parois cellulaires des microalgues et/ou les débris cellulaires de ces dernières peuvent optionnellement encapsuler les lipides au moins jusqu'à ce que le produit alimentaire la contenant soit cuit, ce qui augmente la durée de vie des lipides.

La farine de microalgues fournit également d'autres bénéfices, comme des micronutriments, des fibres alimentaires (glucides solubles et insolubles), des phospholipides, des glycoprotéines, des phytostérols, tocophérols, tocotriénols, et du sélénium.

Les microalgues peuvent être modifiées de manière à réduire la production de pigments, voire à l'inhiber totalement. Par exemple, Chlorella protothecoides peut être modifiée par mutagenèses par UV et/ou chimique de manière à être réduite ou dénuée en pigments.

Il peut en effet être particulièrement intéressant d'avoir des microalgues dépourvues de pigment de façon à éviter l'obtention d'une couleur verte plus ou moins marquée dans les produits de cuisson dans lesquels la farine de microalgues est employée.

Comme les microalgues sont destinées à la production de farine destinées à des formulations alimentaires, les microalgues ne subissent aucune modification génétique comme par exemple mutagénèse, transgénèse, génie génétique et/ou chimique. Ainsi, les microalgues n'ont pas subi de modifications de leur génome par quelque technique de biologie moléculaire que ce soit.

Ainsi les algues destinées à la production de la farine de microalgues possèdent le statut GRAS. Le concept GRAS (Generally Recognized As Safe) créé en 1958 par la Food and Drug Administration (FDA) permet la régulation de substances ou extraits ajoutés aux aliments et qui sont considérés comme sans danger par un panel d'expert.

Les conditions appropriées de culture à utiliser sont notamment décrites dans l'article d'Ikuro Shihira-Ishikawa et Eiji Hase, « Nutritional Control of Cell Pigmentation in Chlorella protothecoides with special reference to the degeneration of chloroplast induced by glucose », Plant and Cell Physiology, 5, 1964.

Cet article décrit notamment que tous les grades de couleur peuvent être produits par Chlorella protothecoides (incolore, jaune, vert jaunâtre et vert), en faisant varier les sources et les ratios d'azote et de carbone. En particulier, des cellules « délavées » et « incolores » sont obtenues en utilisant des milieux de culture riches en glucose et pauvres en azote. La distinction entre cellules incolores et cellules jaunes est faite dans cet article. De plus, les cellules délavées cultivées en excès de glucose et en azote limité possèdent de fort taux de croissance. De plus, ces cellules contiennent de fortes quantités de lipides.

D'autres articles tel que celui de Han Xu, Xiaoling Miao, Qingyu Wu , « High quality biodiesel production from a microalga Chlorella protothecoides by heterotrophic growth in fermenters », Journal of Biotechnoloy, 126, (2006), 499-507 décrivent que des conditions de culture hétérotrophiques, c'est-à-dire en absence de lumière permettent d'obtenir une biomasse élevée avec une teneur élevée en lipides dans les cellules de microalgues.

Les milieux de croissance solides et liquides sont généralement disponibles dans la littérature, et les recommandations pour la préparation des milieux particuliers qui conviennent à une grande variété de souches de microorganismes peuvent être trouvées, par exemple, en ligne à www.utex.org/, un site maintenu par l'Université du Texas à Austin pour sa collection de culture d'algues (UTEX).

Au vu de ses connaissances générales et de l'état de l'art précité, l'homme du métier chargé de cultiver les cellules de microalgues sera tout à fait capable d'adapter les conditions de culture afin d'obtenir une biomasse nombreuse, riche en protéines et/ou en lipides et dépourvue soit en totalité soit de façon atténuée de pigments chlorophylliens.

Les microalgues sont cultivées en milieu liquide pour produire la biomasse en tant que telle.

Les microalgues sont cultivées dans un milieu contenant une source de carbone et une source d'azote, soit en présence de lumière, soit en absence de lumière.

Les microalgues sont cultivées dans un milieu contenant une source de carbone et une source d'azote en absence de lumière (conditions hétérotrophiques).

La production de biomasse est réalisée en fermenteurs (ou bioréacteurs). Les exemples spécifiques de bioréacteurs, les conditions de culture, et la croissance hétérotrophe et les méthodes de propagation peuvent être combinés de toute manière appropriée pour améliorer l'efficacité de la croissance microbienne et des lipides et / ou de production de protéines.

Pour préparer la biomasse pour une utilisation dans des compositions alimentaires, la biomasse obtenue en fin de fermentation est concentrée ou récoltée, du milieu de fermentation. Au moment de la récolte de la biomasse de microalgues du milieu de fermentation, la biomasse comprend des cellules intactes pour l'essentiel en suspension dans un milieu de culture aqueux.

Pour concentrer la biomasse, on procède alors à une étape de séparation solide-liquide, par filtration, par centrifugation ou par tout moyen connu par ailleurs de l'homme du métier. Après concentration, la biomasse de microalgues peut être traitée afin de produire des gâteaux emballés sous vide, des paillettes d'algues, des homogénats d'algues, de la poudre d'algues, de la farine d'algues, ou de l'huile d'algues.

On procède également au séchage de la biomasse de microalgues pour faciliter le traitement ultérieur ou pour une utilisation de la biomasse dans ses différentes applications, notamment alimentaires.

Différentes textures et saveurs peuvent être conférées à des produits alimentaires, selon que la biomasse algale est séchée, et si oui, en fonction de la méthode de séchage mise en oeuvre. Se référer aux brevets US 6.607.900 et US 6.372.460 pour des exemples.

La farine de microalgues peut être préparée à partir de la biomasse de microalgues concentrée qui a été mécaniquement lysée et homogénéisée, l'homogénat étant ensuite atomisé ou flash-séché.

Les cellules utilisées pour la production de farine de microalgues peuvent être lysées pour libérer leur huile ou lipides. Les parois cellulaires et les composants intracellulaires sont broyés ou réduits, par exemple grâce à un homogénéisateur, en particules ou débris cellulaires non agglomérés. Selon un mode préférentiel de l'invention, les particules résultantes possèdent une taille moyenne inférieure à 500 µm, 100 µm ou même 10 µm ou moins.

Les cellules lysées peuvent également être séchées.

Par exemple, un disrupteur à pression peut être utilisé pour pomper une suspension contenant les cellules à travers un orifice restreint pour lyser les cellules. Une pression élevée (jusqu'à 1500 bars) est appliquée, suivie d'une expansion instantanée à travers une buse. Le cassage des cellules peut être réalisé par trois mécanismes différents : empiètement sur la vanne, cisaillement élevé du liquide dans l'orifice, et chute de pression soudaine en sortie, provoquant une explosion de la cellule.

La méthode libère des molécules intracellulaires.

Un homogénéisateur NIRO (GEA NIRO SOAVI) (ou tout autre homogénéisateur haute pression) peut être utilisé pour casser des cellules.

Ce traitement de la biomasse algale sous haute pression (environ 1500 bars) lyse généralement plus de 90 % des cellules et réduit la taille des particules à moins de 5 microns.

La pression appliquée est de 900 bars à 1200 bars. De manière préférentielle la pression appliquée est de 1100 bars.

Afin d'augmenter le pourcentage de cellules lysées, la biomasse de microalgues peut subir un double traitement à haute pression, voire plus (triple traitement, ..).

Préférentiellement une double homogénéisation est utilisée afin d'augmenter le pourcentage de cellules lysées supérieur à 50%, supérieur à 75% ou supérieur à 90%. Le pourcentage de cellules lysées d'environ 95% a été observé grâce à ce double traitement.

La lyse des cellules de microalgues est optionnelle mais préférée lorsqu'une farine riche en lipides (e.g ; supérieure à 10%) est souhaitée.

La farine de microalgues peut aussi être sous la forme de cellules non lysées.

Ou une lyse partielle est souhaitée, c'est-à-dire que la farine de microalgues est sous la forme de cellules partiellement lysées et contient de 25% à 75% de cellules lysées.

Ou encore une lyse maximale voire totale est souhaitée, c'est-à-dire que la farine de microalgues est sous la forme de cellules fortement voire totalement lysées et contient 85% ou plus de cellules lysées, de préférence plus de 90%.

Ainsi la farine de microalgue est susceptible d'être sous une forme non broyée jusqu'à une forme extrêmement broyée avec des taux de broyage supérieurs à 95%. Des exemples spécifiques portent sur des farines de microalgues présentant des taux de broyage de 50%, 85% ou 95 % de lyse des cellules, de préférence 85% ou 95 %.

Une farine de microalgues riche en protéines peut être produite. Cette farine de microalgues riches en protéines peut être sous la forme de cellules non lysées (cellules intactes non lysées et non broyées).

De manière alternative, un broyeur à billes est plutôt utilisé. Dans ce type de broyeur, les cellules sont agitées en suspension avec de petites particules abrasives. Le cassage des cellules est provoqué par les forces de cisaillement, le broyage entre les billes, et les collisions avec des billes. En fait, ces billes cassent les cellules pour en libérer le contenu cellulaire. La description d'un broyeur à billes approprié est par exemple faite dans le brevet US 5.330.913.

On obtient une suspension de particules, optionnellement de plus petite taille que les cellules d'origine sous la forme d'une émulsion « huile dans eau ». Cette émulsion peut ensuite être atomisée et l'eau est éliminée, laissant une poudre sèche contenant les débris cellulaires et les lipides. Après séchage, la teneur en eau ou l'humidité de la poudre est généralement inférieure à 10 %, préférentiellement inférieure à 5% et de façon plus préférée inférieure à 3% en poids.

Cependant, renfermant de l'huile à une teneur de 10%, 25% voire 50 % en poids de la poudre sèche, on peut déplorer l'obtention d'une poudre sèche d'aspect collante, qui s'écoule difficilement. Différents agents d'écoulement (y compris les produits dérivés de la silice) peuvent alors être ajoutés. Il peut être également rencontré des problèmes de dispersibilité dans l'eau des farines de biomasse séchées, présentant alors de moins bonnes propriétés de mouillabilité.

La société Demanderesse a mis au point des granules de farine de microalgues présentant une distribution granulométrique particulière, des propriétés d'écoulement et de mouillabilité remarquables. Notamment, ces granules permettent de stabiliser la farine de microalgues, et de permettre leur incorporation aisée, à grande échelle, dans des produits alimentaires qui doivent rester savoureux et nutritifs.

Les granules de farine de microalgues conformes à l'invention sont ainsi caractérisés en ce qu'ils possèdent les trois caractéristiques suivantes :
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm et
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

Les granules de farine de microalgues selon l'invention peuvent être d'abord caractérisés par leur distribution granulométrique, et particulièrement sur leur diamètre de particule. Cette mesure est réalisée sur un granulomètre laser LS de marque COULTER®, muni de son module de dispersion petit volume ou SVM (125 ml) en suivant les spécifications du constructeur (dans les « *Small Volume Module Operating instructions* »).

Les particules de farine de microalgues sont agglomérées durant leur préparation. Malgré cette agglomération, les granules de farine de microalgues selon l'invention présentent également des propriétés d'écoulement tout à fait satisfaisantes, selon un test A.

Ces propriétés d'écoulement confèrent de nombreux avantages dans la production de produits alimentaires utilisant la farine de microalgues. Par exemple, lors de la réalisation de produits alimentaires de nombreuses mesures précises de quantité de farine doivent être effectuées, et les aliquotes de farine sont souvent préparés de façon automatique. Il est donc indispensable que la farine et plus particulièrement la farine ne microalgues possède une bonne aptitude à l'écoulement, de façon à ne pas motter dans les systèmes automatisés industriels.

Le test A consiste à mesurer le degré de cohésion des granules de farine de microalgues selon l'invention.

Le test A consiste tout d'abord à tamiser les granules de farine de microalgues selon l'invention sur un tamis d'ouverture de maille de 800 µm. Les granules de farine présentant une taille inférieure à 800 µm sont ensuite récupérés, introduits dans un récipient fermé et subissent un mélange par mouvement épicycloïdal à l'aide d'un mélangeur de laboratoire de marque TURBULA type T2C. Par ce mélange, selon leurs propres caractéristiques, les granules de farine de microalgues conformes à l'invention exprimeront leurs propensions à s'agglomérer ou à se repousser.

Les granules ainsi mélangés sont ensuite déposés sur une colonne de 3 tamis (2000 µm ; 1400 µm ; 800 µm) pour un nouveau tamisage.

Le tamisage terminé, le refus sur chaque tamis est quantifié et le résultat donne une illustration du caractère « cohésif » ou « collant » des granules de farine de microalgues.

Ainsi, une poudre de granules à écoulement libre, donc peu cohésive, ne sera pratiquement pas arrêtée par les tamis de grande ouverture, mais le sera d'autant plus que les mailles desdits tamis seront resserrées.

Le protocole de mesure de la taille de particules selon le test A est le suivant :
- tamiser la quantité de produit nécessaire sur un tamis de 800 µm pour récupérer 50 g de produit de taille inférieure à 800 µm,
- introduire ces 50 g de granules de farine de taille inférieure à 800 µm dans un bocal en verre de contenance de 1 litre (Ref. BVBL Verrerie Villeurbannaise-Villeurbanne France) et refermer le couvercle,
- disposer ce bocal dans le mélangeur TURBULA modèle T2C réglé sur la vitesse de 42 t/mn (Willy A. Bachofen Sarl-Sausheim-France) et mélanger pendant 5 minutes,
- préparer une colonne de 3 tamis (de marque Saulas -Diamètre 200 mm ; Paisy Cosdon - France) qui seront placés sur un tamiseur de marque Fritsch modèle Pulverisette type 00.502 ; détail du montage en partant du bas vers le haut : tamiseur, fond de tamis, tamis de 800 µm, tamis de 1400 µm, tamis de 2000 µm, couvercle du tamiseur.
- déposer la poudre issue du mélange sur le haut de la colonne (tamis de 2000 µm), fermer avec le couvercle du tamiseur et tamiser pendant 5 minutes sur le tamiseur FRITSCH, avec une amplitude 5 en position permanente,
- peser le refus sur chaque tamis.

Les granules de farine de microalgues selon l'invention présentent alors :
- entre 0,5 et 60 % en poids pour le refus à 2000 µm,
- entre 0,5 et 60 % en poids pour le refus à 1400 µm, et
- entre 0,5 et 95 % en poids pour le refus à 800 µm.

A titre comparatif, les poudres de farine de microalgues préparées par des technologies de séchage classiques (atomisation simple effet) présentent quant à elles un aspect collant, de faible fluidité, ce qui se traduit par un comportement selon le test A :
- entre 50 et 90 % en poids de refus sur 2000 µm
- entre 0,5 et 30 % en poids de refus sur 1400 µm
- entre 5 et 40 % en poids de refus sur 800 µm.

En d'autres termes, une majorité de la poudre de farine de microalgues (plus de 50 % de la poudre) ne parvient pas à franchir le seuil des 2000 µm, alors qu'initialement tamisée sur 800 µm.

Ces résultats démontrent que les technologies de séchage classiques conduisent plutôt à la fabrication de poudres très cohésives, puisqu'après mélange, mettant en oeuvre peu d'énergie mécanique (durée de tamisage d'à peine 5 mn), des particules inférieures à 800 µm ne parviennent pas à traverser un tamis de 2000 µm, d'une ouverture pourtant 2,5 fois plus grande.

Il s'en déduit aisément qu'une poudre classique, présentant un tel comportement, n'est pas facile à mettre en oeuvre dans une préparation où une répartition homogène des ingrédients est recommandée.

Inversement, les farines de microalgues décrites sont plus faciles à mettre en oeuvre car elles sont moins collantes. Ce caractère collant moindre est évident au vu des nombreuses mesures incluant la petite taille des granules, la grande mouillabilité et l'écoulement amélioré.

Les granules de farine de microalgues décrits ne présentent qu'un faible refus (< 50%) sur 2000 µm pour la famille de granules de fine granulométrie et quasiment aucun refus (5%) pour la famille de granules de grosse granulométrie. Il est donc démontré que les particules de farine de microalgues produites selon les méthodes décrites sont moins collantes que les farines de microalgues préparées selon les méthodes conventionnelles décrites dans l'art antérieur.

Les granules de farine de microalgues décrites sont enfin caractérisés par un degré de mouillabilité remarquable, selon un test B.

La mouillabilité est une propriété technologique très souvent utilisée pour caractériser une poudre remise en suspension dans l'eau, par exemple en industries laitières.

Elle traduit l'aptitude d'une poudre à s'immerger après avoir été déposée à la surface de l'eau (Haugaard Sorensen et al. « Méthodes d'analyse des produits laitiers déshydratés », Niro A/S (ed.), Copenhagen, Denmark, 1978), et reflète ainsi la capacité de la poudre à absorber de l'eau à sa surface (Cayot P. et Lorient D., « Structures et technofonctions des protéines du lait ». Paris : Airlait Recherches: Tec et Doc, Lavoisier, 1998).

La mesure de cet indice consiste classiquement à mesurer le temps nécessaire à une certaine quantité de poudre pour pénétrer dans l'eau à travers sa surface libre au repos. Selon Haugaard Sorensen et al. (1978), une poudre est dite « mouillable » si son IM (Indice de Mouillabilité) est inférieur à 20 secondes.

Il faut également associer à la mouillabilité, l'aptitude au gonflement de la poudre. En effet, lorsqu'une poudre absorbe de l'eau, elle gonfle progressivement. Puis, la structure de la poudre disparaît lorsque les divers constituants sont solubilisés ou dispersés.

Parmi les facteurs influençant la mouillabilité, il y a la présence de grosses particules primaires, la réintroduction des fines, la masse volumique de la poudre, la porosité et la capillarité des particules de poudre ainsi que la présence d'air, la présence de matières grasses à la surface des particules de poudre et les conditions de reconstitution.

Le test B mis au point par la société Demanderesse consiste ici à considérer plus particulièrement le comportement de la poudre de farine de microalgues lorsque mise en contact de l'eau, par la mesure, après un certain temps de contact, de la hauteur de la poudre qui décante lorsque placée à la surface de l'eau.

Le protocole de ce test est le suivant :
- dans un bécher de forme basse de 600 ml (bêcher FISCHERBRAND FB 33114), introduire 500 ml d'eau déminéralisée à 20°C,
- placer uniformément 25 g de la poudre de farine de microalgues à la surface de l'eau, sans mélanger,
- observer le comportement de la poudre après 3 h de contact,
- mesurer la hauteur du produit qui a pénétré la surface de l'eau et qui est décanté au fond du bêcher.

Une poudre très cohésive, collante, de faible mouillabilité demeurera à la surface du liquide, tandis qu'une poudre de meilleure mouillabilité, moins collante, décantera plus aisément.

Les granules de farine de microalgues décrits présentent alors un degré de mouillabilité, exprimé selon ce test B, par la hauteur du produit décanté dans un bêcher, à une valeur comprise entre 0 et 4 cm, de préférence entre 0 et 2 cm, et plus préférentiellement entre 0 et 0,5 cm.

A titre comparatif, la farine de microalgues séchées classiquement par atomisation simple effet se maintient à la surface de l'eau, et ne s'hydrate pas suffisamment pour pouvoir décanter au fond du bêcher.

Les granules de farine de microalgues décrits sont également caractérisés par :
- leur densité aérée,
- leur surface spécifique et
- leur comportement après dispersibilité dans l'eau.

La densité aérée est déterminée selon une méthode conventionnelle de mesure de la densité aérée, c'est-à-dire en mesurant la masse d'un récipient vide (en grammes) d'un volume connu, puis en mesurant la masse du même récipient rempli avec le produit à tester.

La différence entre la masse du récipient rempli et la masse du récipient vide, divisée par le volume (en ml) du récipient donne la valeur de la densité aérée.

Pour ce test, le récipient d'une contenance de 100 ml utilisé et le grattoir ainsi que l'appareil de mesure commercialisés par la société HOSOKAWA sous la marque POWDER TESTER type PTE, en appliquant la méthode recommandée dans les « operating Instructions » pour mesurer une densité aérée.

Dans ces conditions, les granules de farine de microalgues décrits présentent une densité aérée comprise entre 0,30 et 0,50 g/ml.

Cette valeur de densité aérée est d'autant plus remarquable que les granules de farine de microalgues présentent une densité plus élevée que la farine de microalgues séchées par voie classique. En effet, il est admis que la densité d'un produit sera d'autant plus faible qu'il sera granulé par atomisation, par exemple inférieure à 0,30 g/ml.

Or, quoique granulés, les produits présentent une densité aérée plus élevée qu'attendue.

Les granules de farine de microalgues décrits peuvent également être caractérisés par leur surface spécifique.

On détermine la surface spécifique sur l'ensemble de la distribution granulométrique des granules de farine de microalgues grâce à un analyseur de surface spécifique Quantachrome basé sur un test d'absorption de l'azote sur la surface du produit soumis à l'analyse, réalisé sur appareil SA3100 de chez Beckmann Coulter, en suivant la technique décrite dans l'article BET Surface Area by Nitrogen Absorption de S. BRUNAUER et al. (Journal of American Chemical Society, 60, 309, 1938).

Les granules de farine de microalgues, après dégazage 30 minutes à 30°C sous vide, présentent alors une surface spécifique comprise entre 0,10 et 0,70 m²/g.

A titre comparatif, la farine de microalgues séchées par atomisation classique présente une surface spécifique selon BET de 0,65 m²/g.

Il est donc surprenant de constater que les granules de farine de microalgues, plus denses que la farine de microalgues classique, présentent une surface spécifique d'autant plus faible que leur taille est élevée.

A la connaissance de la société Demanderesse, les propriétés particulières des granules de farine de microalgues n'ont jamais été décrites. Les granules de farine de microalgues de l'invention se différencient alors aisément des farines de microalgues obtenues par simple atomisation.

Les granules de farine de microalgues décrits sont susceptibles d'être obtenus par un procédé d'atomisation particulier, qui met en oeuvre des buses de pulvérisation à haute pression dans une tour à flux parallèles qui dirige les particules vers une bande mobile située dans le bas de la tour. La matière est ensuite transportée comme une couche poreuse à travers des zones de post-séchage et de refroidissement, qui lui donnent une structure craquante, comme celle d'un gâteau qui se brise à l'extrémité de la bande. La matière est ensuite mise en oeuvre pour obtenir la taille de particules souhaitée.

Pour procéder à la granulation de la farine d'algues, en suivant ce principe d'atomisation, on peut employer par exemple un atomiseur FILTERMAT™ commercialisé par la société GEA NIRO ou un système de séchage TETRA MAGNA PROLAC DRYER™ commercialisé par la société TETRA PAK.

De manière surprenante et inattendue, la société Demanderesse a ainsi constaté que la granulation de la farine de microalgues par la mise en oeuvre par exemple de ce procédé FILTERMAT™, permettait non seulement de préparer avec un haut rendement le produit décrit sur le plan de la distribution granulométrique et de son aptitude à l'écoulement, mais aussi de lui conférer des propriétés inattendues de mouillabilité sans qu'il ne soit utile d'utiliser d'agents liant de granulation, ni d'agents anti-mottant (bien qu'ils puissent être optionnellement employés). En effet, les procédés décrits antérieurement (telle l'atomisation simple effet) ne permettent pas d'obtenir l'ensemble des caractéristiques souhaitées.

Le procédé de préparation des granules de farine de microalgues décrits comprend alors les étapes suivantes :
1) préparer une émulsion de farine de microalgues à une matière sèche comprise entre 15 et 40 % en poids sec,
2) introduire cette émulsion dans un homogénéisateur haute pression,
3) la pulvériser dans un atomiseur vertical équipé d'une bande mobile à sa base, et d'une buse haute pression à sa partie supérieure, tout en réglant :
   a) la pression appliquée au niveau des buses de pulvérisation à des valeurs de plus de 100 bars, de préférence entre 100 et de 200 bars, et de préférence encore entre 160 et 170 bars,
   b) la température d'entrée comprise entre 150°C et 250°C, de préférence entre 180°C et 200°C, et
   c) la température de sortie dans cette zone d'atomisation comprise entre 60°C et 120°C, de préférence entre 60°C et 110°C et de préférence encore entre 60°C et 80°C,
4) régler les températures d'entrée de la zone de séchage sur la bande mobile entre 40°C et 90°C, de préférence entre 60°C et 90°C, et la température de sortie entre 40°C et 80°C, et régler les températures d'entrée de la zone de refroidissement à une température entre 10°C et 40°C, de préférence entre 10°C et 25°C, et la température de sortie entre 20°C et 80°C, de préférence entre 20°C et 60°C,
5) collecter les granules de farine de microalgues ainsi obtenus.

La première étape du procédé décrit consiste à préparer une suspension de farine de microalgues, de préférence une farine de microalgues riche en lipides (par exemple de 30% à 70% de préférence de 40% à 60% de lipide par poids sec cellulaire), dans de l'eau à une matière sèche comprise entre 15 et 40 % en poids sec.

Selon un mode préférentiel de mise en oeuvre du procédé de production de la farine de microalgues, on obtient en fin de fermentation, une biomasse pouvant être à une concentration comprise entre 130g/l et 250 g/l, avec une teneur en lipides d'environ 50% en poids sec, une teneur en fibres de 10% à 50% en poids sec, une teneur en protéines de 2% à 15 % en poids sec, et une teneur en sucres inférieure à 10% en poids.

Selon un autre mode de mise en oeuvre du procédé de production de la farine de microalgues, on obtient en fin de fermentation une biomasse pouvant être à une concentration comprise entre 130g/l et 250 g/l, avec une teneur en protéines d'environ 50% en poids sec, une teneur en fibres de 10% à 50% en poids sec, une teneur en lipides de 10% à 20% en poids sec, et une teneur en sucres inférieure à 10% en poids.

La biomasse extraite du milieu de fermentation par tout moyen connu de l'homme du métier est ensuite :
- concentrée (par exemple par centrifugation)
- optionnellement conservée par l'addition de conservateurs standards (benzoate de sodium et sorbate de potassium par exemple),
- broyée cellulairement.

L'émulsion peut ensuite être homogénéisée. Cette homogénéisation haute pression de l'émulsion peut être accomplie dans un dispositif à deux étages, par exemple un homogénéisateur GAULIN commercialisé par la société APV, avec une pression de 100 à 250 bars au premier étage, et 10 à 60 bars au second étage.

La suspension de farine ainsi homogénéisée est ensuite pulvérisée dans un atomiseur vertical équipé d'une bande mobile à sa base, et d'une buse haute pression à sa partie supérieure. La pression appliquée au niveau des buses de pulvérisation est réglée à des valeurs de plus de 100 bars, de préférence entre 100 et de 200 bars, et de préférence encore entre 160 et 170 bars, la température d'entrée est réglée de façon à être comprise entre 150°C et 250°C, de préférence entre 180°C et 200°C, et la température de sortie dans cette zone d'atomisation est réglée de façon à être comprise entre 60°C et 120°C, de préférence entre 60°C et 110°C et de préférence encore entre 60°C et 80°C.

La bande mobile permet de déplacer le matériel à travers des zones de post-séchage et de refroidissement. La températures d'entrée de la zone de séchage sur la bande mobile est réglée entre 40°C et 90°C, de préférence entre 60°C et 90°C, et la température de sortie de la zone de séchage est réglée entre 40°C et 80°C, et la température d'entrée de la zone de refroidissement est réglée entre 10°C et 40°C, de préférence entre 10°C et 25°C, et la température de sortie de la zone de refroidissement est réglée entre 20°C et 80°C, de préférence entre 20°C et 60°C.

La pression appliquée et la température d'entrée de la zone de séchage sont des paramètres importants pour la détermination de la texture du gâteau au niveau la bande mobile et ont donc un impact sur la distribution de la taille des particules.

Les granules de farine de microalgues selon les conditions de l'étape précédente du procédé tombent sur la bande mobile avec une humidité résiduelle comprise entre 2 et 4 %.

Pour amener le degré d'humidité des granules de farine de microalgues à la valeur souhaitée inférieure à 4%, et plus préférentiellement inférieur à 2%, la société Demanderesses a trouvé qu'il fallait respecter ces barèmes de température des zones de séchage et de refroidissement.

Optionnellement, un antioxydant (de type Butylhydroxyanisol (BHA), Butylhydroxytoluène (BHT), ou d'autres connus pour une utilisation alimentaire) peuvent être ajoutés avant l'étape de séchage pour préserver la fraîcheur et la conservation.

La dernière étape du procédé consiste enfin à collecter les granules de farine de microalgues ainsi obtenus.

Préférentiellement les granules de farine de microalgues contiennent au moins 10% en poids sec de lipides, de préférence au moins 12% et encore plus préférentiellement de 25 à 35% ou plus en poids sec de lipides.

En particulier les granules de farine de microalgues contiennent au moins 25% de lipides, ou au moins 55% de lipides exprimés en poids sec.

Les granules de farine de microalgues obtenus selon le procédé décrit ci-dessus sont susceptibles de contenir des cellules de microalgues intactes, une mixture de cellules de microalgues intactes et de cellules broyées ou principalement des cellules de microalgues broyées.

Dans un mode de réalisation, une lyse non poussée est souhaitée, c'est-à-dire que le pourcentage de cellules intactes contenues dans les granules de la farine de microalgues est compris entre 25% à 75%.

Selon un autre mode de réalisation, une lyse partielle est souhaitée, c'est-à-dire de 25% à 75% de cellules lysée présentes dans la farine de microalgues.

Selon un autre mode de réalisation, une lyse totale est souhaitée, c'est-à-dire que la farine de microalgues contient 85% ou plus des cellules lysée, de préférence 90% ou plus.

Ainsi selon les applications souhaitées, on choisira une farine de microalgues possédant un taux plus ou moins élevé de cellules lysées.

Comme décrit précédemment, la farine de microalgues est sous la forme de granules de farine de microalgues. Lesdits granules sont produits selon le procédé tel que décrit ci-dessus.

Dans la présente invention, les termes « produit de cuisson » et « produit de panification » ainsi que les terme « boulangerie », « pâtisseries », « viennoiserie » et « biscuiteries » doivent être interprétés de manière large, comme se référant en général au domaine de la production de produits cuits au four à partir de pâtes fermentées à base d'amidon, ainsi qu'aux domaines de la boulangerie et de la viennoiserie.

Dans ces domaines, les matières grasses d'origine végétale et/ou animale, et plus particulièrement le beurre, occupent une place prépondérante et il est très difficile de les substituer.

Dans la présente invention, le terme « matière grasse d'origine animale et/ou végétale » doit être compris dans son interprétation la plus large et comme désignant par exemple, et de manière non limitative tout produit choisi parmi les beurres, les margarines ou les huiles.

Selon l'article 1er du Décret du 30/12/1988, la dénomination "beurre" est réservée au produit laitier de type émulsion d'eau dans la matière grasse, obtenu par des procédés physiques et dont les constituants sont d'origine laitière. Il doit représenter pour 100 g de produit fini, 82 g au minimum de matière grasse butyrique, 2 g au maximum de matière sèche non grasse et 16 g au maximum d'eau. Il résulte du barattage de la crème de lait, après maturation de celle-ci. Les beurres peuvent être secs ou gras. Un beurre sec est composé essentiellement de triglycérides renfermant des acides gras à haut point de fusion. Un beurre gras est composé essentiellement des triglycérides renfermant des acides gras à bas point de fusion. Les beurres peuvent également être fractionnés. Pour pallier les différences de plasticité du beurre selon la saison, les industriels ont amélioré le beurre en fractionnant la cristallisation des acides gras. L'intérêt pour le professionnel est évident. Il dispose non seulement toute l'année d'une matière première constante en termes de qualité, mais surtout spécialement adaptée à ses fabrications. L'autre modification réalisée par les industriels est la concentration. On enlève toute l'eau du beurre (16% dans un beurre frais). On obtient un beurre concentré, à 99% en moyenne de matière grasse, qui se conserve très bien. Ce beurre concentré, qui peut être fractionné ou non, est toujours additionné dès sa fabrication d'un traceur afin de le distinguer du beurre frais, qui lui n'est pas concentré. Enfin, le beurre peut également être en poudre.

Le beurre a pour principal avantage les valeurs qu'il véhicule, valeurs qui sont identiques à celles développées par l'artisanat : matière première de qualité, produit noble, bénéficiant d'une forte image auprès des consommateurs. De plus, il permet aux produits finis de porter l'appellation « au beurre ». Et en matière de goût, il n'a pas son pareil.

Selon le décret du 30/12/1988, la dénomination "margarine" est réservée au produit obtenu par le mélange de matière grasses et d'eau ou de lait ou de dérivés du lait, se présentant sous la forme d'une émulsion renfermant au moins 82% de matière grasse dont au plus 10% d'origine laitière. Cela dit, le plus fréquemment la margarine est une émulsion huile dans eau complétée des adjuvants de type lécithine de soja.

Selon la présente invention, la matière grasse d'origine végétale désigne également les huiles. Élaborées principalement à partir de plantes oléagineuses, les huiles végétales sont les premiers corps gras consommés dans le monde. On distingue 2 types d'huiles: les huiles fluides extraites principalement de l'olive, d'arachide, de tournesol, de soja, de colza et de germe de maïs qui ont la particularité de rester liquide à 15°C ; et les huiles concrètes extraites à partir de palme, de palmiste et de coprah (noix de coco) qui sont par contre figées et solide à 15°C.

Dans les domaines concernés par la présente invention, les matières grasses d'origine animale et/ou végétale, et plus particulièrement le beurre, doivent posséder des propriétés différentes en fonction des principaux types d'application visées.

Ainsi, pour une application « fourrage et garniture de pâtisseries », les propriétés rhéologiques et organoleptiques des matières grasses utilisées doivent avoir, puisque le produit final est consommé cru, une impression en bouche de « fondant », sans « collant en bouche ». Au niveau texture, la matière grasse étant foisonnée dans ce type de recettes, la formulation doit permettre une introduction d'air aisée et stable dans le temps. Le caractère trop plastique d'une matière grasse, comme par exemple la margarine est un handicap pour cette application, une trop forte cohésion de la matière grasse pouvant en effet diminuer sa capacité au foisonnement.

Pour une application « incorporation » qui regroupe les produits type brioche et cake ou toute autre application dite « pâte jaune », la matière grasse doit être dispersée, souvent rapidement, dans la pâte au cours du pétrissage, elle devra donc être facile à incorporer. La matière grasse doit donc avoir une consistance relativement faible et une texture peu ou pas plastique permettant sa bonne dispersibilité dans la pâte. On recherche donc une matière grasse souple qui se marie intimement aux autres ingrédients, avec un point de fusion généralement bas puisque les pâtes sont travaillées à température ambiante.

Enfin, concernant l'application « feuilletage et pâte levée feuilletée », les matières grasses d'origine utilisées doivent présenter deux propriétés essentielles : un point de fusion élevé et une grande plasticité. La plasticité permet à la matière grasse de s'étaler facilement au laminage mais sans se casser ni se rompre. De plus, une plasticité importante permet également d'être adaptée aux contraintes mécaniques et à l'échauffement subis lors du laminage. Ces particularités conduisent à la capacité à former un film résistant et homogène au cours du laminage. En effet, la technique du feuilletage consiste à intercaler par pliages successifs (tourage et laminage) des couches de pâte (détrempe) et des couches de matière grasse de même épaisseur, ce qui permet, au cours de la cuisson, le développement du produit et l'obtention de feuillets de pâte séparés. Tout l'art du tourier consistera à obtenir des textures de détrempe et de beurre manié les plus proches possible, de manière à favoriser un étalement le plus homogène possible des couches. Les pâtes levées feuilletés (pour croissants et autre type de viennoiseries similaires) sont fabriquées sur le même principe mais de la levure est incorporée dans la détrempe, le tourage est moins important et la pâte ainsi obtenue est placée dans une étuve avant cuisson (« pousse préalable avant cuisson »). Ces pâtes ont une grande friabilité et un développement particulier dû à l'action de la levure incorporée dans la détrempe mais aussi par le développement des feuillets de pâte obtenus au cours de la préparation des pliages successifs de la détrempe avec le beurre.

La Demanderesse a démontré que la matière grasse allégée selon la présente invention peut remplir toutes les spécificités précitées demandées habituellement aux matières grasses traditionnelles. Ainsi la matière grasse allégée a un très bon comportement technologique, rhéologique, plastique, et conduit à des produits finis d'excellentes qualités, et ce quelle que soit l'application visée. Ce qui en fait un allié principal dans les ateliers, notamment un seul type de matière grasse pour plusieurs applications.

Un autre aspect de l'invention concerne également un procédé de préparation d'une matière grasse allégée telle que décrite dans le présent document caractérisé en ce qu'il comprend:
- une incorporation d'une farine de microalgues, sous forme de granules possédant les trois caractéristiques suivantes:
   - une distribution granulométrique monomodale, mesurée sur un granulomètre laser LS de marque COULTER®, comprise entre 2 et 400 µm, centrée sur un diamètre de particules (D mode) entre 5 et 15 µm,
   - des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm, et
   - un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm,
   et optionnellement d'un liquide potable, à une matière grasse d'origine animale et/ou végétale en substitution d'une partie de celle-ci, et,
- un stockage au froid.

Dans un mode préférentiel, le liquide potable est de l'eau et la matière grasse est d'origine animale et plus préférentiellement du beurre.

Dans un autre mode préférentiel, le procédé de préparation de la matière grasse allégée consiste en un prémélange de la farine de microalgues et de l'eau, de façon à bien hydrater la farine préalablement à son incorporation dans la matière grasse d'origine.

Cette réhydratation permet de faire gonfler les granules de microalgues et ensuite de permettre leur très bonne incorporation dans la matière grasse d'origine. La formation d'éventuels grumeaux est ainsi évitée et le pomadage de la matière grasse allégée est facilité.

La réhydratation se fait préférentiellement par mélange avec de l'eau, en utilisant de 10% à 90% de farine de microalgues pour 90% à 10% d'eau, les pourcentages étant exprimés en poids par rapport au poids total du mélange.

Dans un mode préféré de l'invention, le taux de réhydratation de la farine de microalgues est de 1 pour 2. Cette réhydratation consiste donc à 33% environ de farine pour 67% d'eau, exprimés en poids. Dans un autre mode préféré de l'invention, le taux de réhydratation de la farine de microalgues est de 1 pour 3. Cette réhydratation consiste donc à 25% de farine utilisée pour 75% d'eau, exprimés en poids.

En cas de réhydratation préalable de la farine de microalgues, le procédé de préparation d'une matière grasse allégée telle que décrite dans le présent document est caractérisé en ce qu'il comprend:
- un mélange de farine de microalgues et d'eau, à un ratio pouvant aller de 1 :9 à 9 :1, de préférence de 1 :4 à 3 :4 et de manière encore plus préférée de 1 :3 à 1 :2 ,
- une incorporation d'une farine de microalgues préalablement réhydratée à une matière grasse d'origine animale et/ou végétale en substitution d'une partie de celle-ci, et,
- un stockage au froid.

Le ratio correspond à un ratio pondéral, c'est-à-dire au rapport du poids de la farine d'algue sur le poids d'eau.

Est aussi décrit un procédé de préparation d'une matière grasse allégée dans lequel la farine de microalgues est réhydratée préalablement à son mélange avec, ou à son incorporation dans, une matière grasse d'origine animale et/ou végétale en substitution d'une partie de celle-ci. Le procédé selon l'invention peut ainsi comprendre :
- la réhydratation de la farine de microalgue par mélange avec un liquide potable, de préférence de l'eau, selon un ratio de 1:9 à 9:1, préférentiellement 1:3 à 1:2,
- le mélange de la farine d'algue réhydratée à une matière grasse d'origine animale et/ou végétale en substitution d'une partie de celle-ci, et,
- un stockage au froid.

Dans un mode de réalisation préféré, la quantité de matière grasse substituée en poids correspond substantiellement à la quantité de farine de microalgues réhydratée introduite dans la matière grasse allégée. Par « correspond substantiellement » est entendu le poids de matière grasse substituée plus ou moins 20, 10 ou 5 %. Plus particulièrement encore, la quantité de matière grasse substituée en poids correspond à la charge lipide remplacée, en poids.

Dans un mode préférentiel, le procédé de préparation d'une matière grasse allégée peut lui-même en outre être caractérisé en ce qu'il comprend:
- un mélange de la farine de microalgues et de l'eau à une matière grasse d'origine animale et/ou végétale, et de préférence du beurre,
- un stockage à une température inférieure à 10°C et de préférence inférieure à 5°C pendant une durée supérieure à 5 heures, et de préférence supérieure à 10 heures.

Les caractéristiques particulières des granules de la farine de microalgues utilisée permettent à cette dernière une bonne dissolution lors de sa mise en solution dans l'eau.

Ledit procédé permet d'obtenir une matière grasse allégée ayant la texture d'un gel pommadé, c'est-à-dire possédant les caractéristiques rhéologiques proches de celles de la matière grasse généralement utilisée (beurre et/ou margarines).

Ladite matière grasse pommadée est ensuite incorporée dans des recettes de boulangerie, pâtisserie et/ou viennoiserie dans lesquelles elle permet de substituer une partie des matières grasses d'origine végétale et/ou animale traditionnellement employées, tout en permettant de répondre aux exigences du procédé de fabrication utilisé.

Un autre aspect de la présente invention concerne un procédé de préparation d'un produit de boulangerie, pâtisserie et/ou viennoiserie caractérisé en ce qu'il contient une matière grasse allégée telle que décrite dans le présent document en substitution partielle des matières grasses d'origine animale et/ou végétale.

Ledit procédé de préparation d'un produit de boulangerie est également caractérisé en ce qu'il comprend:
- un mélange des différents ingrédients jusqu'à l'obtention d'une pâte, et
- une cuisson de ladite pâte.

Un autre aspect de l'invention concerne une utilisation de la matière grasse allégée en substitution partielle des matières grasses d'origine animale et/ou végétale dans la préparation de crèmes de fourrage et/ou de ganache, toutes deux de préférence destinées également au secteur de la pâtisserie.

La ganache est une préparation épaisse de chocolat servant à garnir une confiserie ou une pâtisserie. Dans sa forme la plus simple, la ganache est un mélange de crème (ou parfois de lait ou de beurre, voire d'un mélange des trois) et de chocolat, généralement en quantité environ égales.

Les fourrages gras au lait sont tous les mélanges obtenus à partir de sucre et de matières grasses végétales et/ou animales, qui contiennent traditionnellement des protéines laitières et qui sont destinés à être utilisés comme garniture de remplissage en confiserie, pâtisserie, boulangerie, biscuiterie et tout autre domaine alimentaire. De tels exemples sont par exemple des fourrages gras pralinés, des fourrages gras fantaisie « chocolat ».

Enfin, un dernier aspect de l'invention concerne une utilisation de la matière grasse allégée en substitution partielle des matières grasses d'origine animale et/ou végétale dans le procédé de préparation d'un produit de boulangerie, pâtisserie et/ou viennoiserie. L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLES

### Exemple 1 : Production de la farine de microalgues

Une souche de *Chlorella protothecoides* (référence UTEX 250), est cultivée dans un fermenteur et selon des techniques connues de l'homme du métier, de façon à ce qu'elle ne produise pas de pigment chlorophyllien. La biomasse résultante est ensuite concentrée de façon à obtenir une concentration finale en cellules de microalgues de 150g/l.

Les cellules sont éventuellement désactivées par traitement thermique à travers une zone HTST (Haute Température / Temps Court) à 85°C pendant 1 minute.

Pour la suite des opérations, la température peut être maintenue sous 8-10°C.

Puis la biomasse lavée est broyée à l'aide d'un broyeur à billes pouvant être de type « bead mill » et plusieurs taux de broyage, notamment de lyse sont alors recherchés : 50% de broyage et 85% de broyage.

Dans un des modes de réalisation, aucun broyage n'est appliqué et le taux de broyage est ainsi nul.

La biomasse ainsi générée et éventuellement broyée peut ensuite être pasteurisée sur une zone HTST (1 minute à 70-80°C) et homogénéisée sous pression dans un homogénéisateur GAUVIN à deux étages (250 bars au 1er étage / 50 bars au second) après ajustement du pH à 7 à la potasse.

Trois lots de farine de microalgues sont ainsi obtenus :
- lot 0% : aucun broyage n'est appliqué ;
- lot 50% : le taux de lyse des cellules après broyage est de 50% ;
- lot 85% : le taux de lyse des cellules après broyage est de 85% ;

Selon les conditions de culture appliquées, la teneur lipidique de la biomasse de microalgues est supérieure à 35%, et la teneur en protéines inférieure à 20%.

### Exemple 2 : Séchage de l'émulsion « huile dans eau » homogénéisée de farine de microalgues

On procède au séchage des trois lots de biomasse obtenue dans l'exemple 1 dans un dispositif FILTERMAT, pour obtenir les granules de farine de microalgues.

Le procédé d'atomisation consiste à pulvériser la suspension homogénéisée à haute pression dans un dispositif de type FILTERMAT commercialisé par la société GEA/NIRO, muni d'une buse d'injection haute pression de type DELAVAN, dans les conditions suivantes :
- la pression est réglée de 160 à 170 bars,
- température d'entrée d'atomisation : 180°C à 200°C,
- température de sortie : 60°C à 80°C,
- température d'entrée de la zone de séchage : 60°C à 90°C,
- température de sortie : 65°C,
- température d'entrée de la zone de refroidissement : 10°C à 20°C

La poudre arrive alors sur la bande avec une humidité résiduelle comprise entre 2 et 4 %.

En sortie de bande : les granules de farines de microalgues présentent une humidité résiduelle comprise entre 1 et 3 %, de l'ordre de 2 %.

### Exemple 3 : Préparation d'une matière grasse allégée

La matière grasse de départ est du beurre à 82% de matières grasses.

Deux matières grasses allégées selon l'invention ont été préparées (avec deux teneurs différentes finales en matières grasses : 65% et 60%).

### A. Préparation d'une matière grasse allégée contenant 65% de matières grasses.

### Réhydratation préalable de la farine de microalgues

- Dans un récipient dissoudre une mesure en poids de farine de microalgues pour trois mesures en poids d'eau.
- Laisser la farine bien se réhydrater au contact de l'eau pendant une heure au moins à température ambiante.
- Préparer la matière grasse allégée en substituant 25% en poids du beurre par 25% de farine de microalgue réhydratée.
- Commencer par pommader le beurre de départ pour permettre son ramollissement.
- Y incorporer la farine de microalgue préalablement hydratée.
- Bien mélanger la farine de microalgues à la matrice beurre par battage.
- Le mélange est ensuite réfrigéré afin qu'il y ait un durcissement de la matière grasse allégée. Il faut compter généralement au minimum 12 heures à 4°C.

### Composition finale de la matière grasse allégée selon l'invention

- Beurre de départ: 75%
- Farine de microalgues à différents taux de broyage : 6,2%
- Eau : 18,3%

### B. Préparation d'une matière grasse allégée contenant 60% de matières grasses.

Le même taux de réhydratation que celui de l'exemple A est utilisé, à savoir une mesure en poids de farine de microalgues pour trois mesures en poids d'eau.

Par contre, la matière grasse allégée est obtenue en substituant 32% en poids de beurre par 32% de farine de microalgues réhydratée.

Le procédé de préparation est identique avec une étape de réfrigération également.

### Composition finale de la matière grasse allégée selon l'invention

- Beurre de départ: 68%
- Farine de microalgues à différents taux de broyage : 8%
- Eau : 24%

### Exemple 4 : Substitution partielle des matières grasses pour une réduction de la charge calorique dans une formule de cakes de style quatre quarts

Les deux lots de farine de microalgues à 0 et 85 % de broyage produits selon l'exemple 2 ont été testés dans une application cake pour une réduction de la teneur en matière grasse et une réduction de la charge calorique.

Un essai témoin a été réalisé contenant du beurre à 82% de matière grasse.

Deux essais: essais 1 et 2 ont été réalisés avec la matière grasse allégée à 65% préparée selon l'exemple 3, pour deux taux de broyage de la farine de 0% et 85%.

Deux autres essais : essais 3 et 4 ont également été réalisés avec la matière grasse allégée à 60% préparée selon l'exemple 3, pour deux taux de broyage de la farine de 0% et 85%.

Les recettes sont données dans les tableaux 1 et 2 ci-dessous. Elles ont été les mêmes quelques soient les taux de broyage de la farine de microalgues utilisée.

Les quatre essais ainsi que le témoin ont été réalisés le même jour.

**Essais avec matière grasse allégée à 65% : tableaux 1**

| | | **Témoin** | | **Avec MG allégée et broyage 0%** | | **Avec MG allégée et broyage 85%** | |
|---|---|---|---|---|---|---|---|
| | | | | **ESSAI 1** | | **ESSAI 2** | |
| | | **g** | **%** | **g** | **%** | **g** | **%** |
| A | beurre 82% | 200,0 | 24,6% | **0** | **0** | **0** | **0** |
| | Matière grasse de l'invention 65%* | 0 | 0,0% | **200,0** | **24,6%** | **200,0** | **24,6%** |
| | Sucrose | 200,0 | 24,6% | 200,0 | 24,6% | 200,0 | 24,6% |
| B | Œufs entiers liquides | 200,0 | 24,6% | 200,0 | 24,6% | 200,0 | 24,6% |
| | Extrait de vanille | 5,0 | 0,6% | 5,0 | 0,6% | 5,0 | 0,6% |
| | Farine de blé | 200,0 | 24,6% | 200,0 | 24,6% | 200,0 | 24,6% |
| | Levure chimique *Volcano* | 5,0 | 0,6% | 5,0 | 0,6% | 5,0 | 0,6% |
| | Sel | 2,0 | 0,2% | 2,0 | 0,2% | 2,0 | 0,2% |
| | | **812,0** | **100%** | **812,0** | **100%** | **812,0** | **100%** |

**Essais avec matière grasse allégée à 60% : tableaux 2**

| | | **Témoin** | | **Avec MG allégée et broyage 0%** | | **Avec MG allégée et broyage 85%** | |
|---|---|---|---|---|---|---|---|
| | | | | **ESSAI 3** | | **ESSAI 4** | |
| | | **g** | **%** | **g** | **%** | **g** | % |
| A | beurre 82% | 200,0 | 24,6% | **0** | **0** | **0** | **0** |
| | Matière grasse de l'invention à 60%* | 0 | 0,0% | **200,0** | **24,6%** | **200,0** | **24,6%** |
| | Sucrose | 200,0 | 24,6% | 200,0 | 24,6% | 200,0 | 24,6% |
| B | Œufs entiers liquides | 200,0 | 24,6% | 200,0 | 24,6% | 200,0 | 24,6% |
| | Extrait de vanille | 5,0 | 0,6% | 5,0 | 0,6% | 5,0 | 0,6% |
| | Farine de blé | 200,0 | 24,6% | 200,0 | 24,6% | 200,0 | 24,6% |
| | Levure chimique *Volcano* | 5,0 | 0,6% | 5,0 | 0,6% | 5,0 | 0,6% |
| | Sel | 2,0 | 0,2% | 2,0 | 0,2% | 2,0 | 0,2% |
| | | **812,0** | **100%** | **812,0** | **100%** | **812,0** | **100%** |

| | | | | | | | |
|---|---|---|---|---|---|---|---|
| La levure chimique Volcano est commercialisée par la société Puratos, industrialaan 25, 1702 Groot-Bijgaarden, Belgique. | | | | | | | |

### Protocole de préparation des quatre quarts

- Mélanger le beurre ou la matière grasse allégée à 65% ou 60% avec le sucre dans le bol d'un mixeur, jusqu'à l'obtention d'une texture crémeuse et dissolution complète des cristaux de sucre.
- Ajouter au mélange précédent les ingrédients du groupe B.
- Mixer le tout pendant 30 secondes en vitesse 1, puis pendant 2 minutes en vitesse 2 et enfin pendant 30 secondes en vitesse 3
- Placer la pâte dans un moule en aluminium graissé (360g).
- Cuisson dans un four à 160°C pendant 35 minutes.

### Analyse des produits finis

Les quatre essais de quatre-quarts ont été goûtés à l'aveugle par un panel de dégustateurs, et leur goût a été jugé très satisfaisant et agréable. Aucune différence en termes de texture, de moelleux, de goût n'a été mise en évidence.

Aucune différence significative n'a été mise en évidence lorsque la comparaison était faite avec le quatre-quarts témoin contenant du beurre.

Ainsi, il est donc possible de réaliser des recettes de quatre-quarts en utilisant des matières grasses allégées avec des teneurs en matières grasses de 65% ou 60% (au lieu des 82% rencontrés traditionnellement dans le beurre) en obtenant des produits tout à fait satisfaisants en terme de texture et de gout. Cette diminution de la matière grasse par la substitution partielle d'une partie du beurre de départ par la matière grasse allégée selon l'invention permet ainsi de diminuer la charge calorique des produits ainsi que l'apport en mauvaises graisses.

L'intérêt de la présente invention est ainsi démontré.

### Example 5: Réalisation de croissants

Le but de cet exemple est de réaliser des croissants avec une matière grasse allégée contenant de la farine de microalgues (taux de broyage de 0% et 85%) dans le but d'améliorer le profil nutritionnel des croissants au beurre. Ces croissants sont ensuite comparés à la formule témoin de croissants avec du beurre de tourage.

Dans cet essai une partie du beurre de départ a été remplacé par la matière grasse allégée à 65% préparée selon l'exemple 3, dans le but d'alléger le profil nutritionnel des croissants.

**Composition des croissants : Tableau 3**

| | **Croissants témoins** | | **Croissants allégés** | |
|---|---|---|---|---|
| | *g* | *%* | *g* | *%* |
| Farine de blé | 980 | 41,0% | 980 | 41,0% |
| Gluten | 20 | 0,8% | 20 | 0,8% |
| Sel | 25 | 1,0% | 25 | 1,0% |
| Levure sèche (OSMO) | 16 | 0,7% | 16 | 0,7% |
| Sucrose | 110 | 4,6% | 110 | 4,6% |
| Œufs entiers | 100 | 4,2% | 100 | 4,2% |
| Acide ascorbique | 0,2 | 0,01% | 0,2 | 0,01% |
| Nutrilife AM17 | 0,2 | 0,01% | 0,2 | 0,01% |
| Lametop 300 | 3 | 0,1% | 3 | 0,1% |
| Préféra SSL 600 | 5 | 0,2% | 5 | 0,2% |
| Eau | 480 | 20,1% | 480 | 20,1% |
| Beurre | 650 | 27,2% | 487 | 20,4% |
| Matière grasse allégée à 65% selon l'invention | 0 | 0,0% | 163 | 6,8% |
| **TOTAL** | ***2389,4*** | ***100%*** | ***2389,4*** | ***100%*** |

La formule pour la détrempe dans laquelle est intégrée la matière grasse allégée selon l'invention est la même pour les croissants témoins (beurre de tourage classique à 84% de MG (matière grasse)) et pour les croissants dits allégés en matière grasse. On utilise les mêmes proportions pour réaliser le feuilletage (580g de pâte=détrempe pour 215g de beurre ou de matière grasse allégée selon l'invention).

### Protocole de préparation des croissants

- Dans un pétrisseur, mélanger toutes les poudres pendant 30 secondes en vitesse 1.
- Ajouter l'eau et les autres ingrédients liquides et mélanger pendant 10 minutes en vitesse 2.
- Laisser reposer au réfrigérateur pendant 2 heures.
- Procéder à un laminage du beurre ou de la matière grasse allégée (épaisseur 10 mm).
- Procéder à un laminage de la pâte (épaisseur de 8mm) et insérer le beurre dans la pâte. Replier.
- Procéder au laminage de l'ensemble (d'abord 20 mm, puis 12mm, puis 8 mm et enfin 6,5 mm).
- Procéder à un « tour simple » de l'ensemble.
- Procéder au laminage de l'ensemble (d'abord 20 mm, puis 12mm, puis 8 mm et enfin 6,5 mm).
- Procéder à un « tour double » de l'ensemble.
- Laisser reposer 30 minutes au réfrigérateur.
- Procéder au laminage de l'ensemble (d'abord 20 mm, puis 12mm, puis 8 mm et enfin 6,5 mm).
- Procéder à un « tour simple » de l'ensemble.
- Procéder au laminage de l'ensemble (d'abord 20 mm, puis 12mm, puis 8 mm et enfin 6,5 mm).
- Procéder à un « tour double » de l'ensemble.
- Procéder à un dernier laminage jusqu'à obtention d'une épaisseur de pâte de 4 mm.
- Former les croissants.
- Apprêt ou pousse en étuve à 26°C, 75% HR pendant 1h20min.
- Cuisson au four à 190°C pendant 25 minutes.

### Remarques sur le pétrissage

La détrempe se forme de façon classique. Elle est souple et bien manipulable.

Au niveau de la mise en forme des croissants, de meilleurs résultats sont obtenus avec le beurre végétal contenant de la farine de microalgues non lysées.

**Analyse des croissants : tableau 4**

| | Témoin beurre | Avec MG allégée |
|---|---|---|
| Calories (kCal/kJ) | 380 kCal / 1589 kJ | 340 kCal / 1422 kJ |
| Protéines | 6,1 | 6,1 |
| Teneur en matières grasses | 23,6 | 18,9 |
| Carbohydrates | 36,0 | 36,3 |
| *Dont DP 1, 2* | *5,0* | *5,1* |
| Fibres totales | 0,8 | 1,3 |
| | | |
| Réduction matière grasse | | 19,1% |
| Réduction calorique | | 10,0% |

Les croissants obtenus ont été dégustés par un jury entrainés et ont été comparés avec les croissants témoins « pur beurre ». Leur texture a été jugée feuilletée et légère et leur goût très proche du goût des croissants témoins. En d'autres termes, les croissants contenant la matière grasse allégée selon la présente invention ont été jugés très bons en termes de visuel, de couleur, de texture et de goût.

Ainsi, il est possible de substituer une partie des matières grasses d'origine animale par une matière grasse allégée selon la présente invention. La réduction de la matière grasse est de 19% dans cet essai. Les croissants obtenus sont similaires en terme de qualité aux croissants obtenus selon la recette pur beurre, ces derniers étant beaucoup plus caloriques.

### Example 6: Préparation de pâte brisée

### Composition de la pâte brisée

- 500g de farine
- 200g de matière grasse végétale à 65% préparée selon l'exemple 3
- 10g de sel
- 100g de sucre
- 110g d'oeuf
- 50g d'eau

### Protocole de préparation

- Bien mélanger les poudres (farine, sel, sucre) avec la matière grasse dans un blender pendant 3 min en vitesse 2.
- Ajouter les oeufs et l'eau et mélanger le tout pendant deux minutes en vitesse 2.
- Etaler la pâte, la garnir et faire cuire le tout.

En parallèle, la même recette a été préparée avec 200 gr de beurre d'origine animale.

Les deux pâtes ont été cuites à blanc et testées à l'aveugle.

Aucune différence significative n'a pu être relevée entre les deux.

Cette recette permet une substitution partielle des matières grasses d'origine animale et une réduction d'environ 20% de la matière grasse.

L'intérêt de la présente invention est ainsi démontré.

## Revendications

1. Matière grasse allégée **caractérisée en ce qu'**au moins 5% de sa charge lipidique initiale sont remplacés par une farine de microalgues sous forme de granules possédant les trois caractéristiques suivantes:
- une distribution granulométrique monomodale, mesurée sur un granulomètre laser LS de marque COULTER®, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm,
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

2. Matière grasse allégée selon la revendication précédente, **caractérisée en ce qu'**au moins 10% ou au moins 20% de sa charge lipidique initiale sont remplacés par une farine de microalgues.

3. Matière grasse allégée selon la revendication 1, **caractérisée en ce qu'**au moins 40% ou au moins 50% de sa charge lipidique initiale sont remplacés une farine de microalgues.

4. Matière grasse allégée selon la revendication 1, **caractérisée en ce qu'**au moins 60% ou au moins 70% de sa charge lipidique initiale sont remplacés par une farine de microalgues.

5. Matière grasse allégée selon l'une quelconque des revendications précédentes, **caractérisée en ce qu'**elle comprend au minimum 40% de matière grasse, de préférence 60% ou 70%, exprimés en poids sec.

6. Matière grasse allégée selon l'une quelconque des revendications précédentes, **caractérisée en ce qu'**elle comprend de 50 à 95% de matière grasse, exprimés en poids sec.

7. Matière grasse allégée selon l'une quelconque des revendications précédentes, **caractérisée en ce qu'**elle contient également un liquide potable.

8. Matière grasse allégée selon la revendication précédente, **caractérisée en ce que** le liquide potable est choisi parmi l'eau, les jus de fruits, les nectars de fruits, les jus de légumes, les nectars de légumes, les sodas, et de préférence de l'eau.

9. Matière grasse allégée selon la revendication 1 **caractérisée en ce qu'**elle contient de 30% à 90% de matière grasse d'origine animale et/ou végétale et de 0,5% à 50% de farine de microalgues, les pourcentages étant indiqués en poids de matière grasse allégé.

10. Matière grasse allégée selon la revendication 7 **caractérisée en ce qu'**elle contient de 30% à 90% de de matière grasse d'origine animale et/ou végétale et de 0,5% à 50% de farine de microalgues et de 1 à 40% de liquide potable, les pourcentages étant indiqués en poids de matière grasse allégé.

11. Matière grasse allégée selon l'une quelconque des revendications précédentes, dans laquelle la farine de microalgues est une farine de microalgues du genre *Chlorella,* et plus particulièrement de l'espèce *Chlorella protothecoides.*

12. Matière grasse allégée selon l'une quelconque des revendications précédentes, **caractérisé en ce que** la farine de microalgues contient au moins 12%, au moins 25%, au moins 50%, ou au moins 75% en poids sec de lipides.

13. Procédé de préparation d'une matière grasse allégée selon l'une quelconque des revendications précédentes, **caractérisé en ce qu'**il comprend:
- une incorporation d'une farine de microalgues, sous forme de granules possédant les trois caractéristiques suivantes:
. une distribution granulométrique monomodale, mesurée sur un granulomètre laser LS de marque COULTER®, comprise entre 2 et 400 µm, centrée sur un diamètre de particules (D mode) entre 5 et 15 µm,
. des notes d'écoulement, déterminées selon un test A, comprises entre 0,5 et 60 % en poids pour le refus à 2000 µm, comprises entre 0,5 et 60 % en poids pour le refus à 1400 µm et comprises entre et 0,5 et 95 % en poids pour le refus à 800 µm, et
. un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm, et optionnellement d'un liquide potable à une matière grasse d'origine animale et/ou végétale en substitution d'une partie de celle-ci, et,
- un stockage au froid.

14. Procédé de préparation d'une matière grasse allégée selon la revendication précédente, **caractérisé en ce qu'**il comprend:
- un mélange de la farine de microalgues et d'eau à une matière grasse d'origine animale et/ou végétale, et de préférence du beurre,
- un stockage à une température inférieure à 10°C, et de préférence inférieure à 5°C, pendant une durée supérieure à 5 heures, et de préférence supérieure à 10 heures.

15. Procédé de préparation d'une matière grasse allégée selon la revendication précédente, **caractérisé en ce que** le mélange de la farine de microalgues et d'eau à la matière grasse d'origine animale et/ou végétale comprend
- un mélange de la farine de microalgues et d'eau, à un ratio pouvant aller de 1 :9 à 9 :1, préférentiellement 1 :3 à 1 :2 , et
- une incorporation de la farine de microalgues préalablement réhydratée à une matière grasse d'origine animale et/ou végétale en substitution d'une partie de celle-ci.

16. Procédé de préparation d'un produit de boulangerie, pâtisserie et/ou viennoiserie **caractérisé en ce qu'**il contient une matière grasse allégée selon l'une quelconque des revendications 1 à 12 en substitution partielle des matières grasses d'origine animale et/ou végétale.

17. Procédé de préparation d'un produit de boulangerie selon la revendication précédente, **caractérisé en ce qu'**il comprend:
- un mélange des différents ingrédients jusqu'à l'obtention d'une pâte, et
- une cuisson de ladite pâte.

18. Utilisation d'une matière grasse allégée selon l'une quelconque des revendications 1 à 13 en substitution partielle des matières grasses d'origine animale et/ou végétale dans la préparation de crèmes de fourrage et/ou de ganache.

19. Utilisation d'une matière grasse allégée selon l'une quelconque des revendications 1 à 12 en substitution partielle des matières grasses d'origine animale et/ou végétale dans un procédé de préparation d'un produit de boulangerie, pâtisserie et/ou viennoiserie selon l'une quelconque des revendications 16 ou 17.

## Patentansprüche

1. Leichtes Fettprodukt, **dadurch gekennzeichnet, dass** wenigstens 5% seines ursprünglichen Fettgehalts durch ein Mikroalgenmehl in Granulatform ersetzt ist, welche die drei folgenden Merkmale besitzt:
- eine monomodale granulometrische Verteilung, gemessen mit einem LS Laser-Granulometer der Marke COULTER®, zwischen 2 und 400 µm, zentriert um einen Teilchendurchmesser (D mode) zwischen 5 und 15 µm,
- Fließgrade, bestimmt nach einem Test A, zwischen 0,5 und 60 Gew.-% für den Siebrückstand bei 2000 µm, zwischen 0,5 und 60 Gew.-% für den Siebrückstand bei 1400 µm und zwischen 0,5 und 95 Gew.-% für den Siebrückstand bei 800 µm,
- einen Benetzbarkeitsgrad, ausgedrückt nach einem Test B durch die Höhe des in einem Becherglas abgesetzten Produkts mit einem Wert zwischen 0 und 4 cm, bevorzugt zwischen 0 und 2 cm und bevorzugter zwischen 0 und 0,5 cm.

2. Leichtes Fettprodukt gemäß dem vorhergehenden Anspruch, **dadurch gekennzeichnet, dass** wenigstens 10% oder wenigstens 20% seines ursprünglichen Fettgehalts durch ein Mikroalgenmehl ersetzt ist.

3. Leichtes Fettprodukt gemäß Anspruch 1, **dadurch gekennzeichnet, dass** wenigstens 40% oder wenigstens 50% seines ursprünglichen Fettgehalts durch ein Mikroalgenmehl ersetzt ist.

4. Leichtes Fettprodukt gemäß Anspruch 1, **dadurch gekennzeichnet, dass** wenigstens 60% oder wenigstens 70% seines ursprünglichen Fettgehalts durch ein Mikroalgenmehl ersetzt ist.

5. Leichtes Fettprodukt gemäß einem der vorhergehenden Ansprüche, **dadurch gekennzeichnet, dass** es mindestens 40%, bevorzugt 60% oder 70% Fett, ausgedrückt in Trockengewichtsprozenten, umfasst.

6. Leichtes Fettprodukt gemäß einem der vorhergehenden Ansprüche, **dadurch gekennzeichnet, dass** es 50 bis 95% Fett, ausgedrückt in Trockengewichtsprozenten, umfasst.

7. Leichtes Fettprodukt gemäß einem der vorhergehenden Ansprüche, **dadurch gekennzeichnet, dass** es auch eine trinkbare Flüssigkeit enthält.

8. Leichtes Fettprodukt gemäß dem vorhergehenden Anspruch, **dadurch gekennzeichnet, dass** die trinkbare Flüssigkeit aus Wasser, Fruchtsäften, Fruchtnektaren, Gemüsesäften, Gemüsenektaren, künstlichen Mineralwässern und bevorzugt Wasser ausgewählt ist.

9. Leichtes Fettprodukt gemäß Anspruch 1, **dadurch gekennzeichnet, dass** es 30% bis 90% Fett tierischen und/oder pflanzlichen Ursprungs und 0,5% bis 50% Mikroalgenmehl enthält, wobei die Prozentgehalte in Gewichtsprozenten des leichten Fettprodukts angegeben sind.

10. Leichtes Fettprodukt gemäß Anspruch 7, **dadurch gekennzeichnet, dass** es 30% bis 90% Fett tierischen und/oder pflanzlichen Ursprungs und 0,5% bis 50% Mikroalgenmehl und 1 bis 40% trinkbare Flüssigkeit enthält, wobei die Prozentgehalte in Gewichtsprozenten des leichten Fettprodukts angegeben sind.

11. Leichtes Fettprodukt gemäß einem der vorhergehenden Ansprüche, wobei das Mikroalgenmehl ein Mehl von Mikroalgen der Gattung *Chlorella* und insbesondere der Spezies *Chlorella protothecoides* ist.

12. Leichtes Fettprodukt gemäß einem der vorhergehenden Ansprüche, **dadurch gekennzeichnet, dass** das Mikroalgenmehl wenigstens 12 Trockengew.-%, wenigstens 25 Trockengew.-%, wenigstens 50 Trockengew.-% oder wenigstens 75 Trockengew.-% Lipide enthält.

13. Verfahren zur Herstellung eines leichten Fettprodukts gemäß einem der vorhergehenden Ansprüche, **dadurch gekennzeichnet, dass** es umfasst:
- Beimischung eines Mikroalgenmehls in Granulatform, welche die drei folgenden Merkmale besitzt:
- eine monomodale granulometrische Verteilung, gemessen mit einem LS Laser-Granulometer der Marke COULTER®, zwischen 2 und 400 µm, zentriert um einen Teilchendurchmesser (D mode) zwischen 5 und 15 µm,
- Fließgrade, bestimmt nach einem Test A, zwischen 0,5 und 60 Gew.-% für den Siebrückstand bei 2000 µm, zwischen 0,5 und 60 Gew.-% für den Siebrückstand bei 1400 µm und zwischen 0,5 und 95 Gew.-% für den Siebrückstand bei 800 µm, und
- einen Benetzbarkeitsgrad, ausgedrückt nach einem Test B durch die Höhe des in einem Becherglas abgesetzten Produkts mit einem Wert zwischen 0 und 4 cm, bevorzugt zwischen 0 und 2 cm und bevorzugter zwischen 0 und 0,5 cm,
- und gegebenenfalls einer trinkbaren Flüssigkeit, zu einem Fett tierischen und/oder pflanzlichen Ursprungs als Ersatz für einen Teil davon, und,
- Lagerung im Kalten.

14. Verfahren zur Herstellung eines leichten Fettprodukts gemäß dem vorhergehenden Anspruch, **dadurch gekennzeichnet, dass** es umfasst:
- Mischen des Mikroalgenmehls und Wasser mit einem Fett tierischen und/oder pflanzlichen Ursprungs, bevorzugt Butter, und
- Lagerung bei einer Temperatur unter 10°C und bevorzugt unter 5°C über einen Zeitraum von mehr als 5 Stunden und bevorzugt von mehr als 10 Stunden.

15. Verfahren zur Herstellung eines leichten Fettprodukts gemäß dem vorhergehenden Anspruch, **dadurch gekennzeichnet, dass** das Mischen des Mikroalgenmehls und Wasser mit dem Fett tierischen und/oder pflanzlichen Ursprungs umfasst:
- Mischen des Mikroalgenmehls und Wasser in einem Verhältnis, das von 1:9 bis 9:1, bevorzugt von 1:3 bis 1:2, reichen kann, und
- Beimischung des zuvor rehydratisierten Mikroalgenmehls zu einem Fett tierischen und/oder pflanzlichen Ursprungs als Ersatz für einen Teil davon.

16. Verfahren zur Herstellung eines Bäckerei-, Konditorei- und/oder Viennoiserieprodukts, **dadurch gekennzeichnet, dass** es ein leichtes Fettprodukt gemäß einem der Ansprüche 1 bis 12 als partiellen Ersatz für Fette tierischen und/oder pflanzlichen Ursprungs enthält.

17. Verfahren zur Herstellung eines Bäckereiprodukts gemäß dem vorhergehenden Anspruch, **dadurch gekennzeichnet, dass** es umfasst:
- Mischen der verschiedenen Bestandteile bis ein Teig erhalten wird, und
- Backen besagten Teigs.

18. Verwendung eines leichten Fettprodukts gemäß einem der Ansprüche 1 bis 13 als partiellen Ersatz für Fette tierischen und/oder pflanzlichen Ursprungs bei der Herstellung von Cremefüllungen und/oder von Ganache.

19. Verwendung eines leichten Fettprodukts gemäß einem der Ansprüche 1 bis 12 als partiellen Ersatz für Fette tierischen und/oder pflanzlichen Ursprungs in einem Verfahren zur Herstellung eines Bäckerei-, Konditorei- und/oder Viennoiserieprodukts gemäß einem der Ansprüche 16 oder 17.

## Claims

1. A reduced-fat-content fat **characterized in that** at least 5% of its initial lipid content is replaced with a microalgal flour in the form of granules having the following three characteristics:
- a monomodal particle size distribution, measured on a COULTER® LS laser particle size analyser, of between 2 and 400 µm, centred on a particle diameter (D mode) between 5 and 15 µm,
- flow grades, determined according to a test A, between 0.5% and 60% by weight for the oversize at 2000 µm, between 0.5% and 60% by weight for the oversize at 1400 µm and between 0.5% and 95% by weight for the oversize at 800 µm,
- a degree of wettability, expressed according to a test B, by the height of the product decanted in a beaker, at a value of between 0 and 4 cm, preferably between 0 and 2 cm, and more preferentially between 0 and 0.5 cm.

2. The reduced-fat-content fat according to the preceding claim, **characterized in that** at least 10% or at least 20% of its initial lipid content is replaced with a microalgal flour.

3. The reduced-fat-content fat according to claim 1, **characterized in that** at least 40% or at least 50% of its initial lipid content is replaced with a microalgal flour.

4. The reduced-fat-content fat according to claim 1, **characterized in that** at least 60% or at least 70% of its initial lipid content is replaced with a microalgal flour.

5. The reduced-fat-content fat according to any of the preceding claims, **characterized in that** it comprises at least 40% of fat, preferably 60% or 70%, expressed by dry weight.

6. The reduced-fat-content fat according to any of the preceding claims, **characterized in that** it comprises from 50% to 95% of fat, expressed by dry weight.

7. The reduced-fat-content fat according to any of the preceding claims, **characterized in that** it also contains a drinkable liquid.

8. The reduced-fat-content fat according to the preceding claim, **characterized in that** the drinkable liquid is selected from water, fruit juices, fruit nectars, vegetable juices, vegetable nectars, sodas, and preferably water.

9. The reduced-fat-content fat according to claim 1, **characterized in that** it contains from 30% to 90% of fat of animal and/or vegetable origin and from 0.5% to 50% of microalgal flour, the percentages being indicated by weight of reduced-fat-content fat.

10. The reduced-fat-content fat according to claim 7, **characterized in that** it contains from 30% to 90% of fat of animal and/or vegetable origin and from 0.5% to 50% of microalgal flour and from 1% to 40% of drinkable liquid, the percentages being indicated by weight of reduced-fat-content fat.

11. The reduced-fat-content fat according to any of the preceding claims, wherein the microalgal flour is a flour of microalgae of the genus *Chlorella,* and more particularly of the species *Chlorella protothecoides.*

12. The reduced-fat-content fat according to any of the preceding claims, **characterized in that** the microalgal flour contains at least 12%, at least 25%, at least 50%, or at least 75% by dry weight of lipids.

13. A process for preparing a reduced-fat-content fat according to any of the preceding claims, **characterized in that** it comprises:
- incorporating a microalgal flour, in the form of granules having the following three characteristics:
. a monomodal particle size distribution, measured on a COULTER® LS laser particle size analyser, of between 2 and 400 µm, centred on a particle diameter (D mode) between 5 and 15 µm
. flow grades, determined according to a test A, between 0.5% and 60% by weight for the oversize at 2000 µm, between 0.5% and 60% by weight for the oversize at 1400 µm and between 0.5% and 95% by weight for the oversize at 800 µm, and
. a degree of wettability, expressed according to a test B, by the height of the product decanted in a beaker, at a value of between 0 and 4 cm, preferably between 0 and 2 cm, and more preferentially between 0 and 0.5 cm,
and optionally a drinkable liquid, into a fat of animal and/or vegetable origin as replacement for a part thereof, and,
- cold storage.

14. A process for preparing a reduced-fat-content fat according to the preceding claim, **characterized in that** it comprises:
- mixing the microalgal flour and water with a fat of animal and/or vegetable origin, and preferably butter,
- storage at a temperature below 10°C, and preferably below 5°C, for a period greater than 5 hours, and preferably greater than 10 hours.

15. A process for preparing a reduced-fat-content fat according to the preceding claim, **characterized in that** the mixing of the microalgal flour and of water with the fat of animal and/or vegetable origin comprises:
- mixing the microalgal flour and water, at a ratio ranging from 1:9 to 9:1, preferentially 1:3 to 1:2, and
- incorporating the rehydrated microalgal flour into a fat of animal and/or vegetable origin as a replacement for a part thereof.

16. A process for preparing a breadmaking, patisserie and/or Viennese pastry product, **characterized in that** it contains a reduced-fat-content fat according to any of claims 1 to 12 as partial replacement for fats of animal and/or vegetable origin.

17. A process for preparing a breadmaking product according to the preceding claim, **characterized in that** it comprises:
- mixing the various ingredients until a dough is obtained, and
- baking said dough.

18. Use of a reduced-fat-content fat according to any of claims 1 to 13 as partial replacement for fats of animal and/or vegetable origin in the preparation of ganache and/or filling creams.

19. Use of a reduced-fat-content fat according to any of claims 1 to 12 as partial replacement for fats of animal and/or vegetable origin in a process for preparing a breadmaking, patisserie and/or Viennese pastry product according to any of claims 16 or 17.
